# EUROPEAN PATENT APPLICATION

(11) **EP 4 668 859 A1**
(43) Date of publication of application: **24.12.2025**
(21) Application number: 24795988.5
(22) Date of filing: 22.04.2024
(51) Int. Cl.: H04W 36/00

(54) **CELL HANDOVER METHOD AND RELATED APPARATUS**

(30) Priority: 28.04.2023 CN 202310487566
(71) Applicant: Huawei Technologies Co., Ltd., Shenzhen, Guangdong 518129 (CN)
(72) Inventor: FAN, Bo, Shenzhen, Guangdong 518129 (CN); CHEN, Lei, Shenzhen, Guangdong 518129 (CN)
(74) Representative: Maiwald GmbH
(86) International application number: PCT/CN2024/089023
(87) International publication number: WO 2024/222607

(57) **Abstract**

This application discloses a cell handover method and a related apparatus, and relates to the communication field. The method includes: A terminal device determines at least one cell group, where each cell group of the at least one cell group includes at least one first-type cell. The terminal device performs cell handover, and sends a reference signal in a cell to which the terminal device performs handover. That the terminal device performs cell handover, and sends the reference signal in the cell to which the terminal device performs handover includes: For the at least one cell group including a first cell group and a second cell group, after sending a reference signal in a first-type cell in the first cell group, the terminal device performs handover to at least one second-type cell, and performs handover to a first-type cell in the second cell group for sending a reference signal, where a first order includes a configuration order of the at least one cell group, an index order of the at least one cell group, or a reference signal sending time order of a first-type cell included in each cell group of the at least one cell group, and the first cell group and the second cell group are any two neighboring cell groups of the at least one cell group that is sorted in the first order.

## Description

This application claims priority to Chinese Patent Application No. 202310487566.0, filed with the China National Intellectual Property Administration on April 28, 2023 and entitled "CELL HANDOVER METHOD AND RELATED APPARATUS", which is incorporated herein by reference in its entirety.

### TECHNICAL FIELD

This application relates to the field of communication technologies, and in particular, to a cell handover method and a related apparatus.

### BACKGROUND

A 5th generation (5th generation, 5G) mobile communication system supports carrier aggregation (carrier aggregation, CA). Carrier aggregation means that frequency resources of a plurality of cells are aggregated to obtain a higher bandwidth, and transmission is performed in the bandwidth, to increase a transmission bandwidth. Uplink carrier aggregation transmission and downlink carrier aggregation transmission may be performed between a terminal device and a network device. During actual application, an uplink service load is usually different from a downlink service load. For example, the downlink service load is usually higher than the uplink service load. Therefore, a quantity of cells corresponding to uplink carrier aggregation is different from a quantity of cells corresponding to downlink carrier aggregation. In addition, during downlink transmission, the network device needs to obtain downlink channel information, and calculate a precoding matrix based on the downlink channel information. Then, the network device precodes downlink data by using the precoding matrix. In this way, downlink transmission performance is improved. The network device may measure a sounding reference signal (sounding reference signal, SRS) from the terminal device to obtain uplink channel information. Because an uplink channel and a downlink channel are usually reciprocal, the network device may determine the downlink channel information based on the uplink channel information.

It can be learned that in an existing protocol, the network device is supported in obtaining the downlink channel information through SRS measurement. Generally, in a downlink direction, the terminal device supports downlink carrier aggregation transmission in a plurality of cells, but in an uplink direction, the terminal device supports transmission in only a single cell. Therefore, to obtain downlink channel information of the plurality of cells, the terminal device needs to separately send an SRS in the plurality of cells. However, because the terminal device has a sending capability only in a single cell in the uplink direction, to enable the terminal device to send an SRS in another cell, the terminal device needs to perform handover to the another cell.

In view of this, how the terminal device performs cell handover to reduce a quantity of cell handovers and improve data transmission performance is an urgent problem to be resolved.

### SUMMARY

This application provides a cell handover method and a related apparatus, to cause a terminal device to perform cell handover according to a first handover rule, and send a reference signal in a cell to which the terminal device performs handover. This helps reduce a quantity of cell handovers, avoid a large data transmission loss caused by frequent cell handovers, and improve data transmission performance.

According to a first aspect of this application, a cell handover method is provided, including:
A terminal device receives configuration information from a network device, where the configuration information is used to configure at least one cell group, each cell group of the at least one cell group includes at least one first-type cell, and the first-type cell is a cell for which a physical uplink control channel (physical uplink control channel, PUCCH) and/or a physical uplink shared channel (physical uplink shared channel, PUSCH) of the terminal device are/is not configured. The terminal device performs cell handover, and sends a reference signal in a cell to which the terminal device performs handover. That the terminal device performs cell handover, and sends the reference signal in the cell to which the terminal device performs handover includes at least one of the following: For the at least one cell group, the terminal device sequentially performs handover in a first order to a first-type cell in each cell group of the at least one cell group for sending a reference signal, where the first order includes a configuration order of the at least one cell group, an index order of the at least one cell group, or a reference signal sending time order of a first-type cell included in each cell group of the at least one cell group; for any cell group of the at least one cell group, the terminal device sequentially performs handover in a second order to at least one first-type cell in the any cell group for sending a reference signal, where the second order includes a configuration order, an index order, or a reference signal sending time order of the at least one first-type cell in the any cell group; and/or for the at least one cell group including a first cell group and a second cell group, after sending a reference signal in a first-type cell in the first cell group, the terminal device performs handover to at least one second-type cell, and performs handover to a first-type cell in the second cell group for sending a reference signal, where the second-type cell is a cell for which the PUCCH and/or the PUSCH of the terminal device are/is configured, and the first cell group and the second cell group are any two neighboring cell groups of the at least one cell group that is sorted in the first order.

In the foregoing technical solution, the network device configures at least one cell group for the terminal device. The terminal device may perform cell handover according to a first handover rule. For the at least one cell group, the terminal device sequentially performs handover in the first order to a first-type cell in each cell group of the at least one cell group for sending a reference signal. For any cell group of the at least one cell group, the terminal device sequentially performs handover in the second order to at least one first-type cell in the any cell group for sending a reference signal. However, between the first cell group and the second cell group, the terminal device needs to perform handover back to the at least one second-type cell. In this way, the terminal device performs cell handover in a cell group manner. This helps reduce a quantity of cell handovers, and avoid a large data transmission loss caused by frequent cell handovers of the terminal device. For example, each cell group includes a plurality of first-type cells. After the terminal device consecutively performs handover to the plurality of first-type cells in the cell group, the terminal device performs handover back to the at least one second-type cell. This reduces a quantity of cell handovers, and improves data transmission performance. It should be understood that the at least one cell group may be determined by the terminal device, or may be preconfigured. Therefore, that the terminal device receives the configuration information from the network device may alternatively be replaced with that the terminal device determines the at least one cell group.

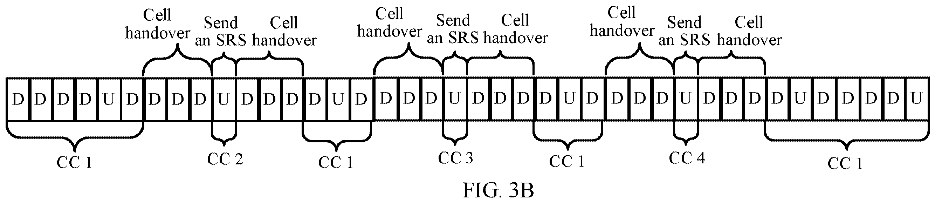

According to the first aspect, in a possible implementation, the method further includes: The terminal device sends the PUCCH in a first target cell based on a PUCCH sending parameter. In this way, the terminal device sends the PUCCH of the second-type cell, and it is ensured that transmission of the PUCCH of the second-type cell is not affected. Optionally, the first target cell includes one or more first-type cells of the at least one cell group. This avoids a problem that the terminal device cannot perform transmission of the PUCCH in a long period of time because the terminal device consecutively performs handover between a plurality of first-type cells. This improves flexibility of sending the PUCCH of the second-type cell by the terminal device. It should be understood that this implementation does not depend on the first aspect. In other words, this implementation may be decoupled from the technical solution in the first aspect. This implementation may be used as an independent technical solution, that is, a technical solution of an independent aspect. Optionally, this implementation is an implementation combined with the first aspect. During actual application, this implementation may alternatively be combined with a cell handover technical solution shown in FIG. 3B. Specifically, a cell handover technical solution used by the terminal device is not limited in this implementation.

According to the first aspect, in a possible implementation, the first target cell is a cell in which the terminal device is located in a sending slot, where the sending slot is a sending slot that is indicated by the network device to the terminal device and that is for sending the PUCCH. In other words, a cell in which the terminal device is located or to which the terminal device performs handover in the sending slot is the first target cell.

Alternatively, the first target cell is a cell in which the terminal device is located in an available slot, where the available slot is an available slot after a sending slot that is indicated by the network device to the terminal device and that is for sending the PUCCH. In other words, in a process in which the terminal device performs cell handover, a cell to which the terminal device performs handover or in which the terminal device is located in the available slot is the first target cell.

According to the first aspect, in a possible implementation, the PUCCH sending parameter includes at least one of the following: a sending slot of the PUCCH, a frequency-domain resource of the PUCCH, a path loss measurement resource of the PUCCH, or a timing advance (timing advance, TA) of the PUCCH. In this implementation, specific content included in the PUCCH sending parameter is shown. This helps the terminal device send the PUCCH in the first target cell.

According to the first aspect, in a possible implementation, the method further includes: The terminal device receives first indication information from the network device, where the first indication information indicates the first target cell; the terminal device receives second indication information from the network device, where the second indication information indicates a sending slot; and the terminal device uses, as the first target cell, a cell in which the terminal device is located in the sending slot; the terminal device receives second indication information from the network device, where the second indication information indicates a sending slot; and if the sending slot is not an available slot, the terminal device determines a 1^{st} available slot after the sending slot of the PUCCH, and uses, as the first target cell, a cell in which the terminal device is located in the 1^{st} available slot; the terminal device receives second indication information from the network device, where the second indication information indicates a sending slot; and a cell in which the terminal device is located in the sending slot is the first target cell; and the cell in which the terminal device is located in the sending slot is a cell in which the terminal device is located or to which the terminal device performs handover in the sending slot; or the terminal device receives second indication information from the network device, where the second indication information indicates a sending slot, and if the sending slot is not an available slot, a cell in which the terminal device is located in a 1^{st} available slot after the sending slot is the first target cell; and the cell in which the terminal device is located in the 1^{st} available slot after the sending slot is a cell in which the terminal device is located or to which the terminal device performs handover in the 1^{st} available slot after the sending slot. In this implementation, some possible implementations in which the terminal device determines the first target cell are provided. This facilitates implementation of the solution, ensures that the terminal device selects an appropriate cell as the first target cell, and ensures sending of the PUCCH.

According to the first aspect, in a possible implementation, the method further includes: The PUCCH carries hybrid automatic repeat request (hybrid automatic repeat request, HARQ) feedback information of a physical downlink shared channel (physical downlink shared channel, PDSCH). The method further includes: The terminal device determines a 1^{st} available slot present after a preset time offset is added to receiving time or sending time of the PDSCH, and uses, as the first target cell, a cell in which the terminal device is located in the 1^{st} available slot. In other words, the terminal device determines an available slot by adding a preset time offset to receiving time or sending time of the PDSCH, and uses, as the first target cell, a cell in which the available slot is located. For example, the available slot may be an a^{th} available slot present after the preset time offset is added to the receiving time or sending time of the PDSCH. a is an integer greater than or equal to 1. In this way, the first target cell for the PUCCH carrying the HARQ feedback information of the PDSCH is determined. This helps ensure that the terminal device feeds back the PDSCH in a timely manner, and ensures normal communication between the terminal device and the network device.

According to the first aspect, in a possible implementation, the PUCCH carries the HARQ feedback information of the PDSCH, a cell in which the terminal device is located in an available slot is the first target cell, and the available slot is a 1^{st} available slot present after a preset time offset is added to receiving time or sending time of the PDSCH. The cell in which the terminal device is located in the available slot is a cell in which the terminal device is located or to which the terminal device performs handover in the available slot.

According to the first aspect, in a possible implementation, the PUCCH carries channel state information (channel state information, CSI); and the method further includes: The terminal device determines a sending slot that is configured by the network device and that is for sending the PUCCH, and if the sending slot is an available slot, the terminal device uses, as the first target cell, a cell in which the terminal device is located in the sending slot; or if the sending slot is not an available slot, the terminal device determines a 1^{st} available slot after the sending slot, and uses, as the first target cell, a cell in which the terminal device is located in the 1^{st} available slot. This ensures that the terminal device selects an appropriate cell as the first target cell, and ensures sending of the PUCCH.

According to the first aspect, in a possible implementation, the PUCCH carries the CSI; and if a sending slot is an available slot, a cell in which the terminal device is located in the sending slot is the first target cell, where the sending slot is a sending slot that is configured by the network device for the terminal device and that is for sending the PUCCH, and the cell in which the terminal device is located in the sending slot is a cell in which the terminal device is located or to which the terminal device performs handover in the sending slot; or if a sending slot is not an available slot, a cell in which the terminal device is located in a 1^{st} available slot after the sending slot is the first target cell, where the sending slot is a sending slot that is configured by the network device for the terminal device and that is for sending the PUCCH; and the cell in which the terminal device is located in the 1^{st} available slot after the sending slot is a cell in which the terminal device is located or to which the terminal device performs handover in the 1^{st} available slot after the sending slot.

According to the first aspect, in a possible implementation, the method further includes: The terminal device receives the second indication information from the network device, where the second indication information indicates the sending slot, and if the sending slot is not an available slot, the terminal device uses the 1^{st} available slot after the sending slot as the sending slot of the PUCCH;
the PUCCH carries the HARQ feedback information of the PDSCH, the terminal device determines the 1^{st} available slot present after the preset time offset is added to the sending time or the receiving time of the PDSCH, and the terminal device uses the 1^{st} available slot as the sending slot of the PUCCH; or
the PUCCH carries the CSI, the terminal device determines the sending slot that is configured by the network device and that is for sending the PUCCH, and if the sending slot is an available slot, the terminal device uses the sending slot as the sending slot of the PUCCH, or if the sending slot is not an available slot, the terminal device uses a 1^{st} available slot after the sending slot as the sending slot of the PUCCH. Therefore, a plurality of implementations in which the terminal device determines the sending slot of the PUCCH are provided. This helps ensure that the terminal device performs transmission of the PUCCH in a timely manner, and ensures normal communication between the terminal device and the network device.

According to the first aspect, in a possible implementation, the method further includes: The terminal device receives the second indication information from the network device, where the second indication information indicates the sending slot, and if the sending slot is not an available slot, the 1^{st} available slot after the sending slot is the sending slot of the PUCCH;
the PUCCH carries the HARQ feedback information of the PDSCH, where the 1^{st} available slot present after the preset time offset is added to the sending time or the receiving time of the PDSCH is the sending slot of the PUCCH; or
the PUCCH carries the CSI, where if the sending slot that is configured by the network device for the terminal device and that is for sending the PUCCH is an available slot, the sending slot is the sending slot of the PUCCH; or if the sending slot that is configured by the network device for the terminal device and that is for sending the PUCCH is not an available slot, the 1^{st} available slot after the sending slot is the sending slot of the PUCCH. Therefore, a plurality of implementations in which the terminal device determines the sending slot of the PUCCH are provided. This helps ensure that the terminal device performs transmission of the PUCCH in a timely manner, and ensures normal communication between the terminal device and the network device.

According to the first aspect, in a possible implementation, the available slot is a slot that meets a first condition, and the first condition includes one or a combination of the following: The available slot is an uplink slot; the available slot is not in a cell handover time period of the terminal device; no reference signal is sent in the available slot; a reference signal is sent in the available slot, and a time-frequency resource for sending the reference signal does not conflict with a time-frequency resource for sending the PUCCH; or a priority of a reference signal in the available slot is lower than a priority of the PUCCH. In this implementation, some possible conditions that the available slots need to meet are specified. This helps the terminal device select an appropriate sending slot as the sending slot of the PUCCH. In this way, it is ensured that the terminal device sends the PUCCH of the second-type cell in the first target cell.

According to the first aspect, in a possible implementation, the method further includes: The terminal device determines, based on a number of a start resource block (resource block, RB) and a quantity of RBs that are configured or indicated by the network device for the PUCCH, an RB that is in the first target cell and that is for sending the PUCCH; or the terminal device determines, based on a number of a start (resource block, RB) and a quantity of RBs that are configured or indicated by the network device for the PUCCH, numbers of all RBs for sending the PUCCH. The terminal device determines, based on the numbers of all the RBs, an RB that is in the first target cell and that is for sending the PUCCH. Alternatively, the terminal device determines, based on a number of a start RB and a quantity of RBs of the PUCCH, an RB that is in the first target cell and that is for sending the PUCCH, where the number of the start RB and the quantity RBs of the PUCCH are configured or indicated by the network device for the terminal device. In this way, it is ensured that the terminal device sends the PUCCH of the second-type cell on a resource in the first target cell. This improves flexibility of sending the PUCCH of the second-type cell by the terminal device.

According to the first aspect, in a possible implementation, the method further includes: The terminal device determines, based on a number of a path loss measurement resource configured or indicated by the network device for the PUCCH, a path loss measurement resource that is in the first target cell and that is for sending the PUCCH; or the terminal device determines, based on a number of a path loss measurement resource of the PUCCH, a path loss measurement resource that is in the first target cell and that is for sending the PUCCH, where the number of the path loss measurement resource of the PUCCH is configured or indicated by the network device for the terminal device. This helps the terminal device measure a path loss value between the terminal device and the first target cell by using the path loss measurement resource, and compensates for a transmit power of the PUCCH based on the path loss value. In this way, it is ensured that the first target cell successfully receives the PUCCH.

According to the first aspect, in a possible implementation, the first target cell has two TAs, and the two TAs include TAs respectively corresponding to two timing advance groups (timing advance groups, TAGs) corresponding to the first target cell. The method further includes: If a second-type cell that is in the at least one second-type cell and for which the PUCCH is configured uses one TA, the terminal device uses a 1^{st} TA in the two TAs as the TA of the PUCCH, where the 1^{st} TA is a TA corresponding to a 1^{st} TAG or a TAG with a smaller identifier in the two TAGs; or if a second-type cell that is in the at least one second-type cell and for which the PUCCH is configured uses two TAs, the terminal device determines a TAG identifier corresponding to a TA used by the PUCCH in the second-type cell, and the terminal device uses a TA corresponding to the TAG identifier in the first target cell as the TA of the PUCCH. In this way, the terminal device determines the TA of the PUCCH. The terminal device may send the PUCCH in the first target cell by using the TA, so that it is ensured that the first target cell successfully receives the PUCCH.

According to the first aspect, in a possible implementation, the first target cell corresponds to two TAGs; and the method further includes: A cell for which the PUCCH is configured corresponds to one TAG, and when the terminal device transmits the PUCCH in the first target cell, the TA of the PUCCH is a TA corresponding to a 1^{st} TAG or a TAG with a smaller identifier in the two TAGs; or a cell for which the PUCCH is configured corresponds to two TAGs and the PUCCH corresponds to one TAG of the two TAGs, and when the terminal device transmits the PUCCH in the first target cell, the TA of the PUCCH is a TA corresponding to a TAG that is in the two TAGs corresponding to the first target cell and that has a same identifier as one of the TAGs. The cell for which the PUCCH is configured may be understood as the second-type cell that is in the at least one second-type cell and for which the PUCCH is configured. In this way, the terminal device determines the TA of the PUCCH. The terminal device may send the PUCCH in the first target cell by using the TA, so that it is ensured that the first target cell successfully receives the PUCCH.

According to the first aspect, in a possible implementation, the method further includes: The terminal device sends the PUSCH in a second target cell based on a PUSCH sending parameter. In this way, the terminal device sends the PUSCH of the second-type cell, and it is ensured that transmission of the PUSCH of the second-type cell is not affected. Further, optionally, the second target cell includes one or more first-type cells of the at least one first-type cell. This avoids a problem that the terminal device cannot perform transmission of the PUSCH in a long period of time because the terminal device consecutively performs handover between a plurality of first-type cells. This improves flexibility of sending the PUSCH of the second-type cell by the terminal device. It should be understood that this implementation does not depend on the first aspect. In other words, this implementation may be decoupled from the technical solution in the first aspect. This implementation may be used as an independent technical solution, that is, a technical solution of an independent aspect. Optionally, this implementation is an implementation combined with the first aspect. During actual application, this implementation may alternatively be combined with a cell handover technical solution shown in FIG. 3B. Specifically, a cell handover technical solution used by the terminal device is not limited in this implementation.

According to the first aspect, in a possible implementation, the second target cell is a cell in which the terminal device is located in a sending slot, where the sending slot is a sending slot that is indicated by the network device to the terminal device and that is for sending the PUSCH. In other words, a cell in which the terminal device is located or to which the terminal device performs handover in the sending slot is the second target cell.

Alternatively, the second target cell is a cell in which the terminal device is located in an available slot, where the available slot is an available slot after a sending slot that is indicated by the network device to the terminal device and that is for sending the PUSCH. In other words, in a process in which the terminal device performs cell handover, a cell to which the terminal device performs handover or in which the terminal device is located in the available slot is the second target cell.

According to the first aspect, in a possible implementation, the PUSCH sending parameter includes at least one of the following: a sending slot of the PUSCH, a frequency-domain resource of the PUSCH, a path loss measurement resource of the PUSCH, or a TA of the PUSCH. In this implementation, specific content included in the PUSCH sending parameter is shown. This helps the terminal device send the PUSCH in the second target cell.

According to the first aspect, in a possible implementation, the method further includes: The terminal device receives third indication information from the network device, where the third indication information indicates the second target cell; the terminal device receives fourth indication information from the network device, where the fourth indication information indicates a sending slot, and the terminal device uses, as the second target cell, a cell in which the terminal device is located in the sending slot; the terminal device receives fourth indication information from the network device, where the fourth indication information indicates a sending slot, and if the sending slot is not an available slot, the terminal device determines a 1^{st} available slot after the sending slot, and uses, as the second target cell, a cell in which the terminal device is located in the 1^{st} available slot; or the terminal device receives fourth indication information from the network device, where the fourth indication information indicates a sending slot, and a cell in which the terminal device is located in the sending slot is the second target cell, and the cell in which the terminal device is located in the sending slot is a cell in which the terminal device is located or to which the terminal device performs handover in the sending slot; or the terminal device receives fourth indication information from the network device, where the fourth indication information indicates a sending slot, and if the sending slot is not an available slot, a cell in which the terminal device is located in a 1^{st} available slot after the sending slot is the second target cell; and the cell in which the terminal device is located in the 1^{st} available slot after the sending slot is a cell in which the terminal device is located or to which the terminal device performs handover in the 1^{st} available slot after the sending slot. In this implementation, some possible implementations in which the terminal device determines the second target cell are provided. This facilitates implementation of the solution, ensures that the terminal device selects an appropriate cell as the second target cell, and ensures transmission of the PUSCH.

According to the first aspect, in a possible implementation, the method further includes: The terminal device receives fourth indication information from the network device, where the fourth indication information indicates a sending slot; and if the sending slot is an available slot, the terminal device uses the sending slot as the sending slot of the PUSCH; or if the sending slot is not an available slot, the terminal device uses a 1^{st} available slot after the sending slot as the sending slot of the PUSCH. This helps ensure that the terminal device performs transmission of the PUSCH in a timely manner, and ensures normal communication between the terminal device and the network device.

According to the first aspect, in a possible implementation, the method further includes: The terminal device receives fourth indication information from the network device, where the fourth indication information indicates a sending slot; and if the sending slot is an available slot, the sending slot is the sending slot of the PUSCH; or if the sending slot is not an available slot, a 1^{st} available slot after the sending slot is the sending slot of the PUSCH.

According to the first aspect, in a possible implementation, the method further includes: The terminal device determines, based on a number of a start RB and a quantity of RBs that are configured or indicated by the network device for the PUSCH, an RB that is in the second target cell and that is for sending the PUSCH; or the terminal device determines, based on a number of a start RB and a quantity of RBs that are configured or indicated by the network device for the PUSCH, numbers of all RBs for sending the PUSCH. The terminal device determines, based on the numbers of all the RBs, an RB that is in the second target cell and that is for sending the PUSCH. In this way, it is ensured that the terminal device sends the PUSCH of the second-type cell on a resource in the second target cell. This improves flexibility of sending the PUSCH of the second-type cell by the terminal device.

According to the first aspect, in a possible implementation, the method further includes: The terminal device determines a number of a path loss measurement resource configured or indicated by the network device for the PUSCH, and determines, based on the number of the path loss measurement resource, a path loss measurement resource that is in the second target cell and that is for sending the PUSCH. Alternatively, the method further includes: The terminal device determines, based on a number of a path loss measurement resource configured or indicated by the network device for the PUSCH, a path loss measurement resource that is in the second target cell and that is for sending the PUSCH; or This helps the terminal device measure a path loss value between the terminal device and the second target cell by using the path loss measurement resource, and compensates for a transmit power of the PUSCH based on the path loss value. In this way, it is ensured that the second target cell successfully receives the PUSCH.

According to the first aspect, in a possible implementation, the second target cell has two TAs, and the two TAs include TAs respectively corresponding to two TAGs corresponding to the second target cell. The method further includes: If a second-type cell that is in the at least one second-type cell and for which the PUCCH is configured uses one TA, the terminal device uses a 1^{st} TA in the two TAs as the TA of the second, where the 1^{st} TA is a TA corresponding to a 1^{st} TAG or a TAG with a smaller identifier in the two TAGs; or if a second-type cell that is in the at least one second-type cell and for which the PUCCH is configured uses two TAs, the terminal device determines a TAG identifier corresponding to a TA used by the second in the second-type cell, and the terminal device uses a TA corresponding to the TAG identifier in the second target cell as the TA of the PUSCH. In this way, the terminal device determines the TA of the PUSCH. The terminal device may send the PUSCH in the second target cell by using the TA, so that it is ensured that the second target cell successfully receives the PUSCH.

According to the first aspect, in a possible implementation, the second target cell corresponds to two TAGs, and the method further includes: A cell for which the PUSCH is configured corresponds to one TAG, and when the terminal device transmits the PUSCH in the second target cell, the TA of the PUSCH is a TA corresponding to a 1^{st} TAG or a TAG with a smaller identifier in the two TAGs; or a cell for which the PUSCH is configured corresponds to two TAGs and the PUSCH corresponds to one TAG of the two TAGs, and when the terminal device transmits the PUSCH in the second target cell, the TA of the PUSCH is a TA corresponding to a TAG that is in the two TAGs corresponding to the second target cell and that has a same identifier as one of the TAGs. In this way, the terminal device determines the TA of the PUSCH. The terminal device may send the PUSCH in the second target cell by using the TA, so that it is ensured that the second target cell successfully receives the PUSCH.

According to a second aspect of this application, a cell handover method is provided, including:
The terminal device receives first indication information from the network device. The first indication information indicates a cell handover sequence. The cell handover sequence is a handover sequence of the at least one first-type cell and the at least one second-type cell of the terminal device. The at least one first-type cell is a cell for which a PUCCH and/or a PUSCH of the terminal device are/is not configured. The at least one second-type cell is a cell for which the PUCCH and/or the PUSCH of the terminal device are/is configured. The terminal device performs cell handover in the cell handover sequence, and sends a reference signal in a cell to which the terminal device performs handover. In this way, the terminal device performs cell handover in the cell handover sequence indicated by the network device. This helps reduce a quantity of cell handovers, avoid a large data transmission loss caused by frequent cell handovers of the terminal device, and improve data transmission performance.

According to a third aspect of this application, a cell handover method is provided, including:
A terminal device determines at least two first-type cells of the terminal device, where the at least two first-type cells each are a cell for which a PUCCH and/or a PUSCH of the terminal device are/is not configured. The terminal device performs cell handover, and sends a reference signal in a cell to which the terminal device performs handover. That the terminal device performs cell handover, and sends the reference signal in the cell to which the terminal device performs handover includes: The at least two first-type cells include two first-type cells, and after the terminal device sends a reference signal in a 1^{st} first-type cell in the two first-type cells, if a time interval between reference signal sending time of the 1^{st} first-type cell and reference signal sending time of a 2^{nd} first-type cell in the two first-type cells is less than or equal to a first threshold, the terminal device performs handover to the 2^{nd} first-type cell, or if the time interval between reference signal sending time of the 1^{st} first-type cell and reference signal sending time of a 2^{nd} first-type cell is greater than the first threshold, the terminal device performs handover to at least one second-type cell. The second-type cell is a cell for which the PUCCH and/or the PUSCH of the terminal device are/is configured. The two first-type cells are any two neighboring first-type cells in the at least two first-type cells that are sorted in a first order. The first order includes configuration orders of the at least two first-type cells, index orders of the at least two first-type cells, or reference signal sending time orders of the at least two first-type cells. In this way, this avoids a case in which when the time interval is less than or equal to the first threshold, the terminal device performs handover to the 2^{nd} first-type cell and sends the reference signal. Therefore, time-frequency resources are efficiently used. When the time interval is greater than the first threshold, the terminal device may perform handover back to at least one second-type cell, and the terminal device may perform uplink data transmission. In this way, this avoids a case in which when the time interval is greater than the first threshold, the terminal device performs handover to the 2^{nd} first-type cell, the terminal device needs to wait for a long period of time before sending the reference signal, and consequently, the terminal device cannot send uplink data or a reference signal in a long period of time. In addition, the terminal device performs cell handover based on the time interval between the reference signal sending time of the 1^{st} first-type cell and the reference signal sending time of the 2^{nd} first-type cell. This helps reduce a quantity of cell handovers to some extent. In this way, uplink data transmission performance is improved.

According to the second aspect or the third aspect, in a possible implementation, the method further includes: The terminal device sends the PUCCH in a first target cell based on a PUCCH sending parameter. Further, optionally, the first target cell includes one or more first-type cells. For this implementation, refer to the related descriptions in the first aspect. Details are not described herein again.

It should be understood that this implementation does not depend on the second aspect or the third aspect. In other words, this implementation may be decoupled from the technical solution in the second aspect or the third aspect. This implementation may be used as an independent technical solution, that is, a technical solution of an independent aspect. Optionally, this implementation is an implementation combined with the second aspect or the third aspect. During actual application, this implementation may alternatively be combined with a cell handover technical solution shown in FIG. 3B. Specifically, a cell handover technical solution used by the terminal device is not limited in this implementation.

According to the second aspect or the third aspect, in a possible implementation, the method further includes: The terminal device determines the first target cell. For this implementation, refer to the related descriptions in the first aspect. Details are not described herein again.

According to the second aspect or the third aspect, in a possible implementation, the method further includes: The terminal device determines the PUCCH sending parameter. For this implementation, refer to the related descriptions in the first aspect.

According to the second aspect or the third aspect, in a possible implementation, the method further includes: The terminal device sends the PUSCH in a second target cell based on a PUSCH sending parameter. Further, optionally, the second target cell includes one or more first-type cells. For this implementation, refer to the related descriptions in the first aspect. Details are not described herein again.

It should be understood that this implementation does not depend on the second aspect or the third aspect. In other words, this implementation may be decoupled from the technical solution in the second aspect or the third aspect. This implementation may be used as an independent technical solution, that is, a technical solution of an independent aspect. Optionally, this implementation is an implementation combined with the second aspect or the third aspect. During actual application, this implementation may alternatively be combined with a cell handover technical solution shown in FIG. 3B. Specifically, a cell handover technical solution used by the terminal device is not limited in this implementation.

According to the second aspect or the third aspect, in a possible implementation, the method further includes: The terminal device determines the second target cell. For this implementation, refer to the related descriptions in the first aspect. Details are not described herein again.

According to the second aspect or the third aspect, in a possible implementation, the method further includes: The terminal device determines the PUSCH sending parameter. For this implementation, refer to the related descriptions in the first aspect.

According to a fourth aspect of this application, a communication apparatus is provided, including:
a transceiver module, configured to receive configuration information from a network device, where the configuration information is used to configure at least one cell group, each cell group of the at least one cell group includes at least one first-type cell, and the first-type cell is a cell for which a PUCCH and/or a PUSCH of the communication apparatus are/is not configured; and a processing module, configured to perform cell handover, and send a reference signal in a cell to which the processing module performs handover. That the processing module is configured to perform cell handover, and send the reference signal in the cell to which the processing module performs handover includes at least one of the following: For the at least one cell group, the communication apparatus sequentially performs handover in a first order to a first-type cell in each cell group of the at least one cell group for sending a reference signal, where the first order includes a configuration order of the at least one cell group, an index order of the at least one cell group, or a reference signal sending time order of a first-type cell included in each cell group of the at least one cell group; for any cell group of the at least one cell group, the communication apparatus sequentially performs handover in a second order to at least one first-type cell in the any cell group for sending a reference signal, where the second order includes a configuration order, an index order, or a reference signal sending time order of the at least one first-type cell in the any cell group; and/or for the at least one cell group including a first cell group and a second cell group, after sending a reference signal in a first-type cell in the first cell group, the communication apparatus performs handover to at least one second-type cell, and performs handover to a first-type cell in the second cell group for sending a reference signal, where the second-type cell is a cell for which the PUCCH and/or the PUSCH of the communication apparatus are/is configured, and the first cell group and the second cell group are any two neighboring cell groups of the at least one cell group that is sorted in the first order. The transceiver module is further configured to send a reference signal in a cell to which the processing module performs handover.

According to the fourth aspect, in a possible implementation, the processing module is further configured to send the PUCCH in a first target cell based on a PUCCH sending parameter.

According to the fourth aspect, in a possible implementation, the first target cell is a cell in which the communication apparatus is located in a sending slot, where the sending slot is a sending slot that is indicated by the network device to the communication apparatus and that is for sending the PUCCH.

Alternatively, the first target cell is a cell in which the communication apparatus is located in an available slot, where the available slot is an available slot after a sending slot that is indicated by the network device to the communication apparatus and that is for sending the PUCCH.

According to the fourth aspect, in a possible implementation, the first target cell includes one or more first-type cells of the at least one cell group.

According to the fourth aspect, in a possible implementation, the PUCCH sending parameter includes at least one of the following: a sending slot of the PUCCH, a frequency-domain resource of the PUCCH, a path loss measurement resource of the PUCCH, or a TA of the PUCCH.

According to the fourth aspect, in a possible implementation, the transceiver module is further configured to receive first indication information from the network device, where the first indication information indicates the first target cell;
the transceiver module is further configured to receive second indication information from the network device, where the second indication information indicates a sending slot; and a cell in which the communication apparatus is located in the sending slot is used as the first target cell;
the transceiver module is further configured to receive second indication information from the network device, where the second indication information indicates a sending slot; and the processing module is further configured to use, as the first target cell, a cell in which the communication apparatus is located in the sending slot;
the transceiver module is further configured to receive second indication information from the network device, where the second indication information indicates a sending slot, and if the sending slot is not an available slot, a cell in which the communication apparatus is located in a 1^{st} available slot after the sending slot is the first target cell; or
the transceiver module is further configured to receive second indication information from the network device, where the second indication information indicates a sending slot; and the processing module is further configured to: if the sending slot is not an available slot, determine a 1^{st} available slot after the sending slot of the PUCCH, and uses, as the first target cell, a cell in which the communication apparatus is located in the 1^{st} available slot;

According to the fourth aspect, in a possible implementation, the PUCCH carries the HARQ feedback information of the PDSCH; and the processing module is further configured to: determine a 1^{st} available slot present after a preset time offset is added to receiving time or sending time of the PDSCH, and use, as the first target cell, a cell in which the communication apparatus is located in the 1^{st} available slot; or the processing module is further configured to: determine an available slot by adding a preset time offset to receiving time or sending time of the PDSCH, and use, as the first target cell, a cell in which the available slot is located.

According to the fourth aspect, in a possible implementation, the PUCCH carries the HARQ feedback information of the PDSCH, a cell in which the communication apparatus is located in an available slot is the first target cell, and the available slot is a 1^{st} available slot present after a preset time offset is added to receiving time or sending time of the PDSCH.

According to the fourth aspect, in a possible implementation, the PUCCH carries CSI; and the processing module is further configured to: determine a sending slot that is configured by the network device and that is for sending the PUCCH, and if the sending slot is an available slot, use, as the first target cell, a cell in which the communication apparatus is located in the sending slot; or if the sending slot is not an available slot, determine a 1^{st} available slot after the sending slot, and use, as the first target cell, a cell in which the communication apparatus is located in the 1^{st} available slot.

According to the fourth aspect, in a possible implementation, the PUCCH carries the CSI; and if a sending slot is an available slot, a cell in which the communication apparatus is located in the sending slot is the first target cell, where the sending slot is a sending slot that is configured by the network device for the communication apparatus and that is for sending the PUCCH, and the cell in which the communication apparatus is located in the sending slot is a cell in which the terminal device is located or to which the terminal device performs handover in the sending slot; or if a sending slot is not an available slot, a cell in which the communication apparatus is located in a 1^{st} available slot after the sending slot is the first target cell, where the sending slot is a sending slot that is configured by the network device for the communication apparatus and that is for sending the PUCCH; and

According to the fourth aspect, in a possible implementation, the transceiver module is further configured to receive the second indication information from the network device, where the second indication information indicates the sending slot, and the processing module is further configured to: if the sending slot is not an available slot, use the 1^{st} available slot after the sending slot as the sending slot of the PUCCH;
the PUCCH carries the HARQ feedback information of the PDSCH, and the processing module is further configured to: determine the 1^{st} available slot present after the preset time offset is added to the sending time or the receiving time of the PDSCH, and use the 1^{st} available slot as the sending slot of the PUCCH; or
the PUCCH carries the CSI, and the processing module is further configured to: determine the sending slot that is configured by the network device and that is for sending the PUCCH, and if the sending slot is an available slot, use the sending slot as the sending slot of the PUCCH, or if the sending slot is not an available slot, use a 1^{st} available slot after the sending slot as the sending slot of the PUCCH.

According to the fourth aspect, in a possible implementation, the transceiver module is further configured to receive the second indication information from the network device, where the second indication information indicates the sending slot, and if the sending slot is not an available slot, the 1^{st} available slot after the sending slot is the sending slot of the PUCCH;
the PUCCH carries the HARQ feedback information of the PDSCH, where the 1^{st} available slot present after the preset time offset is added to the sending time or the receiving time of the PDSCH is the sending slot of the PUCCH; or
the PUCCH carries the CSI, where if the sending slot that is configured by the network device for the communication apparatus and that is for sending the PUCCH is an available slot, the sending slot is the sending slot of the PUCCH; or if the sending slot that is configured by the network device for the communication apparatus and that is for sending the PUCCH is not an available slot, the 1^{st} available slot after the sending slot is the sending slot of the PUCCH.

According to the fourth aspect, in a possible implementation, the available slot is a slot that meets a first condition, and the first condition includes one or a combination of the following: The available slot is an uplink slot; the available slot is not in a cell handover time period of the communication apparatus; no reference signal is sent in the available slot; a reference signal is sent in the available slot, and a time-frequency resource for sending the reference signal does not conflict with a time-frequency resource for sending the PUCCH; or a priority of a reference signal in the available slot is lower than a priority of the PUCCH.

According to the fourth aspect, in a possible implementation, the processing module is further configured to: determine, by the terminal device based on a number of an RB and a quantity of RBs that are configured or indicated by the network device for the PUCCH, an RB that is in the first target cell and that is for sending the PUCCH; or determine, based on a number of a start RB and a quantity of RBs that are configured or indicated by the network device for the PUCCH, numbers of all RBs for sending the PUCCH, and determine, based on the numbers of all the RBs, an RB that is in the first target cell and that is for sending the PUCCH.

According to the fourth aspect, in a possible implementation, the processing module is further configured to determine, based on a number of a path loss measurement resource configured or indicated by the network device for the PUCCH, a path loss measurement resource that is in the first target cell and that is for sending the PUCCH.

According to the fourth aspect, in a possible implementation, the first target cell has two TAs, and the two TAs include TAs respectively corresponding to two TAGs corresponding to the first target cell. The processing module is further configured to: if a second-type cell that is in the at least one second-type cell and for which the PUCCH is configured uses one TA, use a 1^{st} TA in the two TAs as the TA of the PUCCH, where the 1^{st} TA is a TA corresponding to a 1^{st} TAG or a TAG with a smaller identifier in the two TAGs; or if a second-type cell that is in the at least one second-type cell and for which the PUCCH is configured uses two TAs, determine a TAG identifier corresponding to a TA used by the PUCCH in the second-type cell, and use a TA corresponding to the TAG identifier in the first target cell as the TA of the PUCCH.

According to the fourth aspect, in a possible implementation, the first target cell corresponds to two TAGs; and the processing module is further configured to: a cell for which the PUCCH is configured corresponds to one TAG, and when the PUCCH is transmitted in the first target cell, the TA of the PUCCH is a TA corresponding to a 1^{st} TAG or a TAG with a smaller identifier in the two TAGs; or a cell for which the PUCCH is configured corresponds to two TAGs and the PUCCH corresponds to one TAG of the two TAGs, and when the PUCCH is transmitted in the first target cell, the TA of the PUCCH is a TA corresponding to a TAG that is in the two TAGs corresponding to the first target cell and that has a same identifier as one of the TAGs. The cell for which the PUCCH is configured may be understood as the second-type cell that is in the at least one second-type cell and for which the PUCCH is configured.

According to the fourth aspect, in a possible implementation, the processing module is further configured to send the PUSCH in a second target cell based on a PUSCH sending parameter.

According to the fourth aspect, in a possible implementation, the second target cell is a cell in which the communication apparatus is located in a sending slot, where the sending slot is a sending slot that is indicated by the network device to the communication apparatus and that is for sending the PUSCH.

Alternatively, the second target cell is a cell in which the communication apparatus is located in an available slot, where the available slot is an available slot after a sending slot that is indicated by the network device to the communication apparatus and that is for sending the PUSCH.

According to the fourth aspect, in a possible implementation, the second target cell includes one or more first-type cells of the at least one cell.

According to the fourth aspect, in a possible implementation, the PUSCH sending parameter includes at least one of the following: a sending slot of the PUSCH, a frequency-domain resource of the PUSCH, a path loss measurement resource of the PUSCH, or a TA of the PUSCH.

According to the fourth aspect, in a possible implementation, the transceiver module is further configured to receive third indication information from the network device, where the third indication information indicates the second target cell;
the transceiver module is further configured to receive fourth indication information from the network device, where the fourth indication information indicates a sending slot; and the processing module is further configured to use, as the second target cell, a cell in which the communication apparatus is located in the sending slot;
the transceiver module is further configured to receive fourth indication information from the network device, where the fourth indication information indicates a sending slot; and the processing module is further configured to: if the sending slot is an available slot, use, as the second target cell, a cell in which the sending slot is located; or if the sending slot is not an available slot, determine a 1^{st} available slot after the sending slot, and use, as the second target cell, a cell in which the communication apparatus is located in the 1^{st} available slot;
the transceiver module is further configured to receive fourth indication information from the network device, where the fourth indication information indicates a sending slot, and a cell in which the communication apparatus is located in the sending slot is the second target cell;
   or
the transceiver module is further configured to receive fourth indication information from the network device, where the fourth indication information indicates a sending slot, and if the sending slot is not an available slot, a cell in which the communication apparatus is located in a 1^{st} available slot after the sending slot is the second target cell.

According to the fourth aspect, in a possible implementation, the transceiver module is further configured to: receive fourth indication information from the network device, where the fourth indication information indicates a sending slot; and the processing module is further configured to: if the sending slot is an available slot, use the sending slot as the sending slot of the PUSCH; or if the sending slot is not an available slot, use a 1^{st} available slot after the sending slot as the sending slot of the PUSCH.

According to the fourth aspect, in a possible implementation, the transceiver module is further configured to receive fourth indication information from the network device, where the fourth indication information indicates a sending slot; and if the sending slot is an available slot, the sending slot is the sending slot of the PUSCH; or if the sending slot is not an available slot, a 1^{st} available slot after the sending slot is the sending slot of the PUSCH.

According to the fourth aspect, in a possible implementation, the processing module is further configured to determine, based on a number of a start RB and a quantity of RBs that are configured or indicated by the network device for the PUSCH, an RB that is in the second target cell and that is for sending the PUSCH; or
the processing module is further configured to: determine, based on a number of a start RB and a quantity of RBs that are configured or indicated by the network device for the PUSCH, numbers of all RBs for sending the PUSCH; and determine, based on the numbers of all the RBs, an RB that is in the second target cell and that is for sending the PUSCH.

According to the fourth aspect, in a possible implementation, the processing module is further configured to: determine a number of a path loss measurement resource configured or indicated by the network device for the PUSCH, and determine, based on the number of the path loss measurement resource, a path loss measurement resource that is in the second target cell and that is for sending the PUSCH; or the processing module is further configured to determine, based on a number of a path loss measurement resource configured or indicated by the network device for the PUSCH, a path loss measurement resource that is in the second target cell and that is for sending the PUSCH.

According to the fourth aspect, in a possible implementation, the second target cell has two TAs, and the two TAs include TAs respectively corresponding to two TAGs corresponding to the second target cell. The processing module is further configured to: if a second-type cell that is in the at least one second-type cell and for which the PUCCH is configured uses one TA, use a 1^{st} TA in the two TAs as the TA of the second, where the 1^{st} TA is a TA corresponding to a 1^{st} TAG or a TAG with a smaller identifier in the two TAGs; or if a second-type cell that is in the at least one second-type cell and for which the PUCCH is configured uses two TAs, determine a TAG identifier corresponding to a TA used by the second in the second-type cell, and use a TA corresponding to the TAG identifier in the second target cell as the TA of the PUSCH.

According to the fourth aspect, in a possible implementation, the second target cell corresponds to two TAGs; and the processing module is further configured to: a cell for which the PUSCH is configured corresponds to one TAG, and when the PUSCH is transmitted in the second target cell, the TA of the PUSCH is a TA corresponding to a 1^{st} TAG or a TAG with a smaller identifier in the two TAGs; or a cell for which the PUSCH is configured corresponds to two TAGs and the PUSCH corresponds to one TAG of the two TAGs, and when the PUSCH is transmitted in the second target cell, the TA of the PUSCH is a TA corresponding to a TAG that is in the two TAGs corresponding to the second target cell and that has a same identifier as one of the TAGs.

According to a fifth aspect of this application, a communication apparatus is provided, including:
a transceiver module, configured to receive first indication information from the network device, where the first indication information indicates a cell handover sequence, the cell handover sequence is a handover sequence of the at least one first-type cell and the at least one second-type cell of the communication apparatus, the at least one first-type cell is a cell for which a PUCCH and/or a PUSCH of the communication apparatus are/is not configured, the at least one second-type cell is a cell for which the PUCCH and/or the PUSCH of the communication apparatus are/is configured; and a processing module, configured to perform cell handover in the cell handover sequence. The transceiver module is further configured to send a reference signal in a cell to which the processing module performs handover.

According to a sixth aspect of this application, a communication apparatus is provided, including:
a processing module, configured to: determine at least two first-type cells of the communication apparatus, where the at least two first-type cells each are a cell for which a PUCCH and/or a PUSCH of the communication apparatus are/is not configured, perform cell handover, and send a reference signal in a cell to which the processing module performs handover. That the processing module is configured to perform cell handover, and send the reference signal in the cell to which the processing module performs handover includes: The at least two first-type cells include two first-type cells, and after the communication apparatus sends a reference signal in a 1^{st} first-type cell in the two first-type cells, if a time interval between reference signal sending time of the 1^{st} first-type cell and reference signal sending time of a 2^{nd} first-type cell in the two first-type cells is less than or equal to a first threshold, the communication apparatus performs handover to the 2^{nd} first-type cell, or if the time interval is greater than the first threshold, the communication apparatus performs handover to at least one second-type cell. The second-type cell is a cell for which the PUCCH and/or the PUSCH of the communication apparatus are/is configured. The two first-type cells are any two neighboring first-type cells in the at least two first-type cells that are sorted in a first order. The first order includes configuration orders of the at least two first-type cells, index orders of the at least two first-type cells, or reference signal sending time orders of the at least two first-type cells.

According to the third aspect or the sixth aspect, in a possible implementation, the time interval between the reference signal sending time of the 1^{st} first-type cell and the reference signal sending time of the 2^{nd} first-type cell includes: a time interval of a time-domain symbol on which the reference signal in the 1^{st} first-type cell is located and a time-domain symbol on which a reference signal in the 2^{nd} first-type cell is located; a time interval between a last time-domain symbol on which the reference signal in the 1^{st} first-type cell is located and a 1^{st} time-domain symbol on which the reference signal of the 2^{nd} first-type cell is located; a time interval of a slot in which the reference signal in the 1^{st} first-type cell is located and a slot in which a reference signal in the 2^{nd} first-type cell is located; or a time interval between a last slot in which the reference signal in the 1^{st} first-type cell is located and a 1^{st} slot in which the reference signal of the 2^{nd} first-type cell is located. In this way, a plurality of implementations of the time interval are defined. This helps enrich scenarios to which the solution is applicable.

According to the fifth aspect or the sixth aspect, in a possible implementation, the processing module is further configured to send the PUCCH in a first target cell based on a PUCCH sending parameter. Optionally, further, the first target cell includes one or more first-type cells.

It should be understood that this implementation does not depend on the fifth aspect or the sixth aspect. In other words, this implementation may be decoupled from the technical solution in the fifth aspect or the sixth aspect. This implementation may be used as an independent technical solution, that is, a technical solution of an independent aspect. Optionally, this implementation is an implementation combined with the fifth aspect or the sixth aspect. During actual application, this implementation may alternatively be combined with a cell handover technical solution shown in FIG. 3B. Specifically, a cell handover technical solution used by the communication apparatus is not limited in this implementation.

According to the fifth aspect or the sixth aspect, in a possible implementation, the processing module is further configured to determine the first target cell.

According to the fifth aspect or the sixth aspect, in a possible implementation, the processing module is further configured to determine the PUCCH sending parameter.

According to the fifth aspect or the sixth aspect, in a possible implementation, the processing module is further configured to send the PUSCH in a second target cell based on a PUCCH sending parameter. Optionally, further, the second target cell includes one or more first-type cells.

It should be understood that this implementation does not depend on the fifth aspect or the sixth aspect. In other words, this implementation may be decoupled from the technical solution in the fifth aspect or the sixth aspect. This implementation may be used as an independent technical solution, that is, a technical solution of an independent aspect. Optionally, this implementation is an implementation combined with the fifth aspect or the sixth aspect. During actual application, this implementation may alternatively be combined with a cell handover technical solution shown in FIG. 3B. Specifically, a cell handover technical solution used by the communication apparatus is not limited in this implementation.

According to the fifth aspect or the sixth aspect, in a possible implementation, the processing module is further configured to determine the second target cell.

According to the fifth aspect or the sixth aspect, in a possible implementation, the processing module is further configured to determine the PUSCH sending parameter.

According to a seventh aspect of this application, a communication apparatus is provided. The communication apparatus includes a processor. The processor is configured to invoke a computer program or computer instructions in a memory, to cause the processor to implement any implementation of any one of the first aspect to the third aspect.

Optionally, the communication apparatus further includes a transceiver, and the processor is configured to control the transceiver to receive or send a signal.

According to an eighth aspect of this application, a communication apparatus is provided. The communication apparatus includes a processor, and the processor is configured to implement any implementation of any one of the first aspect to the third aspect.

According to a ninth aspect of this application, a computer program product including instructions is provided. When the computer program product runs on a computer, the computer is caused to implement any implementation of any one of the first aspect to the third aspect.

According to a tenth aspect of this application, a computer-readable storage medium is provided, including computer instructions. When the instructions are run on a computer, the computer is caused to implement any implementation of any one of the first aspect to the third aspect.

According to an eleventh aspect of this application, a chip apparatus is provided, including a processor, configured to invoke a computer program or computer instructions in a memory, to cause the processor to implement any implementation of any one of the first aspect to the third aspect.

Optionally, the processor is coupled to the memory through an interface.

According to a twelfth aspect of this application, a communication system is provided. The communication system includes a terminal device and a network device. The terminal device is configured to perform some or all steps performed by the terminal device in any one of the first aspect to the third aspect. The network device is configured to send, to the terminal device, configuration information and/or indication information received by the terminal device in any one of the first aspect to the third aspect.

### BRIEF DESCRIPTION OF DRAWINGS

FIG. 1 is a diagram of a communication system to which an embodiment of this application is applied;
FIG. 2 is another diagram of a communication system to which an embodiment of this application is applied;
FIG. 3A is a diagram in which a terminal device supports downlink carrier aggregation transmission but does not support uplink carrier aggregation transmission according to an embodiment of this application;
FIG. 3B is a diagram of performing cell handover by a terminal device;
FIG. 4 is a diagram of an embodiment of a cell handover method according to an embodiment of this application;
FIG. 5 is a diagram of performing cell handover by a terminal device according to an embodiment of this application;
FIG. 6 is a diagram of another embodiment of a cell handover method according to an embodiment of this application;
FIG. 7 is a diagram of still another embodiment of a cell handover method according to an embodiment of this application;
FIG. 8 is a diagram of a structure of a communication apparatus according to an embodiment of this application;
FIG. 9 is another diagram of a structure of a communication apparatus according to an embodiment of this application; and
FIG. 10 is a diagram of a structure of a terminal device according to an embodiment of this application.

### DESCRIPTION OF EMBODIMENTS

Embodiments of this application provide a cell handover method and a related apparatus, to cause a terminal device to perform cell handover according to a first handover rule, and send a reference signal in a cell to which the terminal device performs handover. This helps reduce a quantity of cell handovers, avoid a large data transmission loss caused by frequent cell handovers, and improve data transmission performance.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "contain", "have", and variants thereof all mean "include but are not limited to", unless otherwise specifically emphasized in another manner.

In descriptions of this application, "/" means "or", unless otherwise specified. For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, the term "at least one" means one or more, and the term "a plurality of" means two or more. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c. a, b, and c may be singular or plural.

The technical solutions in this application may be applied to various communication systems, for example, a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle-to-everything (vehicle-to-everything, V2X) communication system.

A communication system to which this application is applicable includes a terminal device and a network device. The terminal device and the network device in this application are described below.

The following describes the terminal device and the network device in this application. The following describes the terminal device and the network device in this application.

The terminal device is also referred to as a user equipment (user equipment, UE), a mobile station (mobile station, MS), a mobile terminal (mobile terminal, MT), a customer premise equipment (customer premise equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self-driving may be an uncrewed aerial vehicle, a helicopter, an airplane, or the like. For example, the wireless terminal in the internet of vehicles may be a vehicle-mounted device, an entire vehicle device, a vehicle-mounted module, a vehicle, a ship, or the like. The wireless terminal in industrial control may be a camera, a robot, a robot arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the foregoing device or apparatus. This is not specifically limited in this application.

The network device may be a device that is deployed in a radio access network and that provides a wireless communication function for the terminal device. For example, the network device may be an access network (radio access network, RAN) node that connects the terminal device to a wireless network, and may also be referred to as an access network device, a RAN entity, an access node, a network node, a network device, a communication apparatus, or the like.

Specifically, the network device may be an access network device of a cellular system related to the 3rd generation partnership project (3rd generation partnership project, 3GPP), for example, a 4th generation (4th generation, 4G) mobile communication system or a 5G mobile communication system. Alternatively, the network device may be an access network device in an open radio access network (open RAN, O-RAN or ORAN) or a cloud radio access network (cloud radio access network, CRAN). Alternatively, the network device may be an access network device in a communication system that integrates the foregoing two or more communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission reception point (transmission and receiving point, TRP). Alternatively, the network device may be an access network device in the 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in the 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna processing unit (active antenna unit, AAU), or a remote radio head (remote radio head, RRH). Alternatively, the network device may be a server, a wearable device, a vehicle, a vehicle-mounted device, or the like. For example, a network device in a V2X technology may be a road side unit (road side unit, RSU).

It should be noted that, in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open-CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open-CU-CP, the central unit-user plane (central unit-user plane, CU-UP) may also be referred to as an open central unit-user plane (open central unit-user plane, O-CU-UP) or an open-CU-UP, and the RU may also be referred to as an open radio unit (open radio unit, O-RU). This is not specifically limited in this application. Any one of the CU, the CU-CP, the CU-UP, the DU, and the RU in this application may be implemented by using a software module, a hardware module, or a combination of the software module and the hardware module.

Optionally, for network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (media access control, MAC), and physical higher layer (PHY-high) |
| O-RU | Physical lower layer (PHY-low) |

Architectures of a CU and a DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on a protocol layer function that is of a wireless network and that is implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility function (access and mobility management function, AMF) in the 5G mobile communication system. The access and mobility function network element is configured to be responsible for mobility management in a mobile network, for example, location update of the terminal device, network registration of the terminal device, and handover of the terminal device. The CU-UP may interact with a network element configured to implement a user plane function in the core network. The network element configured to implement the user plane function in the core network, for example, a user function (user plane function, UPF) in the 5G mobile communication system, is responsible for forwarding and receiving data in the terminal device.

The foregoing configurations of the CU and the DU are merely examples. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency. In this case, a function whose processing time needs to satisfy a low latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer functions and a radio frequency function. The higher-layer function of the physical layer may include a part of functions of the physical layer, and the part of functions is closer to the MAC layer. The lower-layer function of the physical layer may include the other part of functions of the physical layer, and the other part of functions is closer to an intermediate radio frequency side.

It should be noted that the network device may be the device or apparatus described above, or may be a component (for example, a chip), a module, or a unit in the device or apparatus described above. This is not specifically limited in this application.

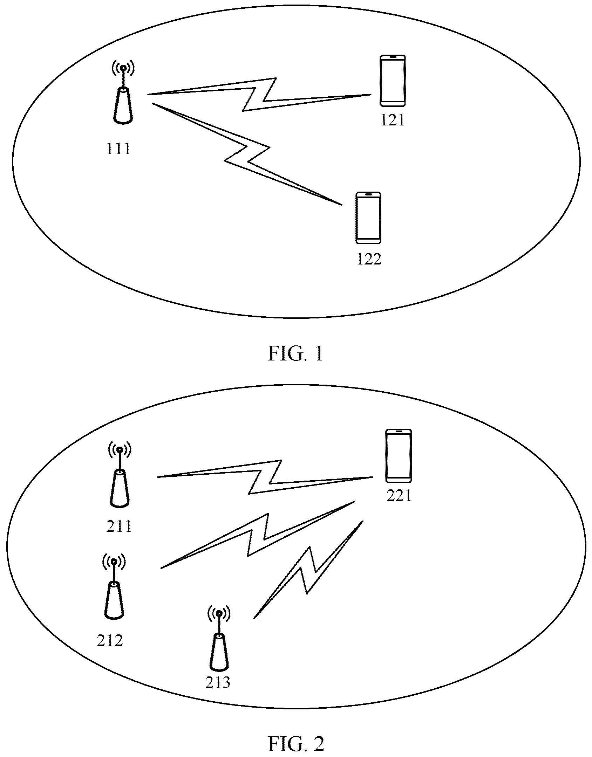

For ease of understanding the technical solutions in embodiments of this application, the following provides, with reference to FIG. 1 and FIG. 2, two possible communication systems to which a beam using method provided in embodiments of this application is applicable.

FIG. 1 is a diagram of a communication system to which an embodiment of this application is applied. As shown in FIG. 1, the communication system includes at least one network device, for example, a network device 111 shown in FIG. 1. The communication system further includes at least one terminal device, for example, a terminal device 121 and a terminal device 122 shown in FIG. 1. In the communication system shown in FIG. 1, the technical solutions in this application may be executed between the network device and the terminal device.

FIG. 2 is another diagram of a communication system to which an embodiment of this application is applied. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. In the communication system shown in FIG. 2, the technical solutions in this application may be executed between the network device and the terminal device.

Some technical terms in this application are described below.

Quasi-co-location (quasi-co-location, QCL): A quasi-co-location relationship indicates that a plurality of resources have one or more same or similar communication features. A same or similar communication configuration may be used for the plurality of resources having the co-location relationship. For example, if two antenna ports have a quasi-co-location relationship, a large-scale property of a channel on which one symbol is transmitted through one port may be deduced from a large-scale property of a channel on which one symbol is transmitted through the other port. The large-scale property may include at least one of the following: delay spread, an average delay, Doppler spread, a Doppler frequency shift, an average gain, a reception parameter, a receive beam number of the terminal device, transmission/reception channel correlation, a receive angle of arrival, spatial correlation of a receiver antenna, a dominant angle of arrival (angle of arrival, AoA), an average angle of arrival, AoA spread, or the like. Specifically, whether the at least two antenna ports have a quasi-co-location relationship is indicated by using a co-location indication. Optionally, the co-location indication indicates whether channel state information reference signals sent by the at least two antenna ports are from a same transmission point, or the co-location indication indicates whether channel state information reference signals sent by the at least two antenna ports are from a same beam group.

Transmission configuration indicator (transmission configuration indicator, TCI) state: The network device may generate different beams pointing to different transmission directions. The terminal device may also generate different beams pointing to different transmission directions. During uplink and downlink data transmission, the terminal device performs sending and receiving by using a corresponding beam, and the beam is indicated by the network device to the terminal device. Specifically, the network device may indicate a receive beam or a transmit beam of the terminal device based on a TCI state. In the 3rd generation partnership project (3rd generation partnership project, 3GPP) protocol, the network device may indicate the TCI state to the terminal device by using a TCI field in downlink control information (downlink control information, DCI). The TCI field is 3 bits, and may specifically represent eight different field values (codepoints). Each field value of the TCI field may be associated with an index of one TCI state. The index of the TCI state may uniquely identify a TCI state. The TCI state includes several parameters, and related information of the transmit beam may be determined based on these parameters. The TCI state is configured by the network device for each terminal device. The TCI state may be a downlink TCI state or an uplink TCI state. Alternatively, each field value of the TCI field may be associated with indexes of two TCI states. The indexes of the two TCI states may uniquely identify the two TCI states, and the two TCI states may include one downlink TCI state and one uplink TCI state.

The downlink TCI state includes several parameters. The terminal device may determine related information of a downlink transmit beam based on these parameters, to determine a corresponding receive beam for receiving information from the network device. The TCI state is configured by the network device for each terminal device. A structure of the downlink TCI state is as follows:

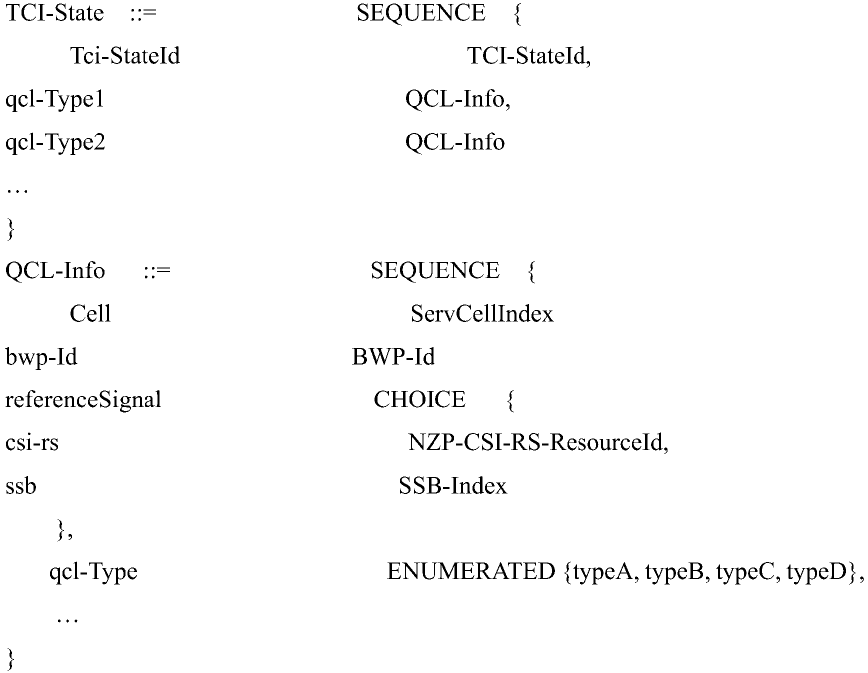

Each TCI state includes an index (namely, Tci-StateId) and two pieces of QCL information (QCL-Info). Each piece of QCL-Info includes a cell (cell) field and a bandwidth part identifier (bwp-Id) that are for indicating a specific bandwidth part of a specific cell to which the TCI state is applied. In other words, different QCL-Info may be configured for different bandwidth parts of different cells, or different QCL-Info may be configured for different bandwidth parts of a same cell. The QCL-Info further includes a reference signal (referenceSignal) for indicating a specific reference signal resource with which a quasi-co-location relationship is formed. In an existing protocol, the term "beam" is usually not directly used, and the beam is usually replaced with another term. For example, during both data transmission and channel measurement, the beam corresponds to a reference signal resource, and one beam corresponds to one reference signal resource. Therefore, "a specific reference signal resource with which a QCL relationship is formed" is essentially means "a specific beam with which a QCL relationship is formed". The QCL relationship means that two reference signal resources (or two antenna ports, where antenna ports and reference signal resources are also in one-to-one correspondence) have some same spatial parameters. Specifically, which spatial parameters are the same depends on a type of the QCL-Info, namely, another field qcl-Type of the QCL-Info. qcl-Type may have four values: {typeA, typeB, typeC, typeD}. typeD is used as an example. typeD indicates that two reference signal resources have same spatial receive parameter information or spatial transmit parameter information, in other words, two beams have a same receive beam or transmit beam. A maximum of one of the two pieces of QCL-Info included in the TCI-state can be of typeD. The TCI-state may also include a reference signal resource (not included in the QCL information) that specially indicates an uplink transmit beam. The terminal device determines, based on the QCL-info of typeD, to receive corresponding downlink transmission by using a corresponding receive beam. Specifically, the following steps are performed.

The network device indicates a specific downlink TCI state to the terminal device by using the DCI. The terminal device determines a reference signal resource in the QCL information of typeD in the downlink TCI state. The terminal device uses a receive beam for the reference signal resource as a receive beam to be used for downlink transmission. It should be noted that the receive beam for the reference signal resource is obtained by the terminal device in advance through a beam management procedure. Through the beam management procedure, the terminal device may determine an optimal receive beam for receiving the reference signal resource, and use the receive beam as the receive beam for the reference signal resource.

The uplink TCI state includes a reference signal resource, to indicate that a same uplink transmit beam as that for the reference signal resource should be used in uplink transmission in the TCI state. The terminal device determines, based on the reference signal resource, to perform uplink transmission by using a corresponding transmit beam. In the uplink TCI state, the reference signal resource is not included in the QCL-info, and QCL types are not distinguished. This is because uplink timing information and frequency offset information do not need to be referenced, and only the uplink transmit beam needs to be referenced. A structure of the uplink TCI state is as follows:

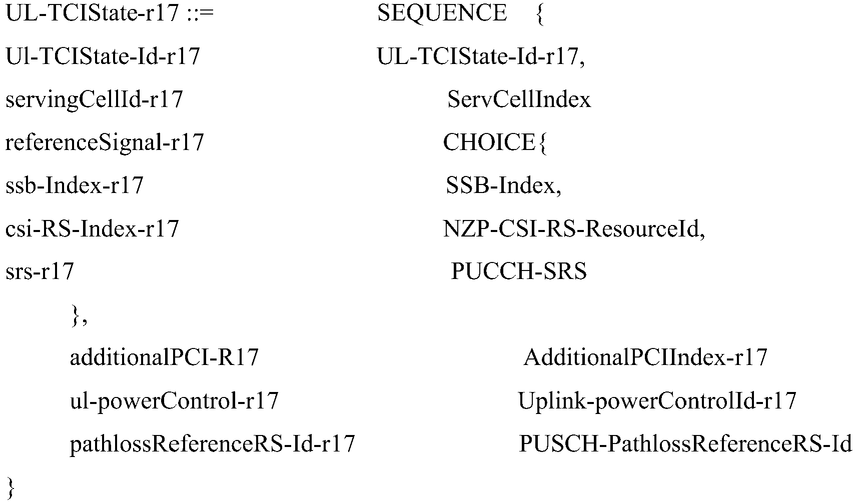

Specifically, the following steps are performed.

The network device indicates a specific uplink TCI state to the terminal device by using the DCI. The terminal device determines a reference signal resource in the uplink TCI state. The terminal device uses a transmit beam for the reference signal resource as a transmit beam to be used by the terminal device to perform uplink transmission. It should be noted that the transmit beam for the reference signal resource is obtained by the terminal device in advance through a beam management procedure.

Configuration, activation, and indication of the TCI state are described below.

Configuration of the TCI-state: The network device configures a plurality of TCI-states for the terminal device by using RRC signaling. These TCI-states each include a piece of QCL-Info of typeD. Alternatively, the network device may configure TCI-states that do not include QCL-info of typeD. However, these TCI-states do not indicate a data transmission beam, and therefore are not further described herein.

Activation of the TCI-state: After configuring the plurality of TCI-states, the network device further needs to activate eight of the TCI-states by using a MAC CE. The eight TCI-states are in one-to-one correspondence with eight values of the TCI field in the DCI. In other words, specific eight TCI-states corresponding to the eight values of the TCI field in the DCI are determined by using the medium access control control element (medium access control control element, MAC CE).

Indication of the TCI state: The network device indicates a specific TCI-state by using the TCI field in the DCI. For example, a value of the TCI field in the DCI sent by the network device to the terminal device is 000, and it indicates that a TCI state corresponding to 000 is used for the data transmission beam. A reference signal included in the QCL-Info of typeD in the TCI state is a channel state information-reference signal (channel state information-reference signal, CSI-RS) whose index is #1, and it indicates that a beam used for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the two descriptions, namely, the TCI-state and the TCI state, in this specification may be interchangeably used.

Spatial relation (spatial relation) parameter: In the 3GPP R15 protocol and the 3GPP R16 protocol, the network device indicates, to the terminal device by using the spatial relation parameter, a transmit beam that should be used by the terminal device. The spatial relation parameter includes a reference signal resource. The reference signal resource may be a downlink reference signal resource, for example, a synchronization signal and physical broadcast channel (synchronization signal and physical broadcast channel block, SSB) or a channel state information reference signal (channel state information reference signal, CSI-RS), and indicates that the terminal device should reversely use a receive beam for the downlink reference signal resource as a transmit beam. The reference signal resource may alternatively be an uplink reference signal resource, for example, a sounding reference signal (sounding reference signal, SRS), and indicates that the terminal device should use a transmit beam for the uplink reference signal resource as a transmit beam. For any uplink transmission, for example, transmission of a PUCCH, a PUSCH, or the SRS, the terminal device needs to determine a spatial relation parameter used for the uplink transmission, and determines, based on the spatial relation parameter, a transmit beam to be used.

TA of the PUCCH: The TA of the PUCCH is a timing advance used by the terminal device to send the PUCCH.

TA of the PUSCH: The TA of the PUSCH is a timing advance used by the terminal device to send the PUSCH.

Currently, a 5G mobile communication system supports carrier aggregation. Carrier aggregation means that frequency resources of a plurality of cells are aggregated to obtain a higher bandwidth, and transmission is performed by using the bandwidth, to increase a transmission bandwidth. Each cell may also be referred to as a carrier component (carrier component, CC). For example, a bandwidth of a cell is 20 MHz (megahertz), and four cells are used by the terminal device to perform carrier aggregation to obtain a bandwidth of 80 MHz, and performs transmission by using the bandwidth of 80 MHz. Uplink transmission between the terminal device and the network device may be performed through uplink carrier aggregation. Downlink transmission between the terminal device and the network device may be performed through downlink carrier aggregation. During actual application, an uplink service load is usually different from a downlink service load. For example, the downlink service load is usually higher than the uplink service load. Therefore, a quantity of cells corresponding to uplink carrier aggregation is different from a quantity of cells corresponding to downlink carrier aggregation. For example, between the terminal device and the network device, four cells are used for downlink carrier aggregation transmission, and two cells are used for uplink carrier aggregation transmission, or even carrier aggregation is not performed during uplink transmission. Therefore, during commercial use, a downlink carrier aggregation capability of the terminal device is stronger than an uplink carrier aggregation capability of the terminal device. For example, some terminal devices can perform downlink carrier aggregation transmission by using four cells, but do not support uplink carrier aggregation transmission. In other words, the terminal device can perform uplink transmission only by using a bandwidth of a single cell.

In addition, during downlink transmission, the network device needs to obtain downlink channel information, and calculate a precoding matrix based on the downlink channel information. The network device precodes downlink data by using the precoding matrix. In this way, downlink transmission performance is improved. In the existing protocol, the network device is supported in obtaining the downlink channel information through SRS measurement. The SRS is an uplink reference signal. The terminal device sends the SRS to the network device, and the network device measures the SRS to obtain uplink channel information. Because an uplink channel and a downlink channel are usually reciprocal, the network device may determine the downlink channel information based on the uplink channel information.

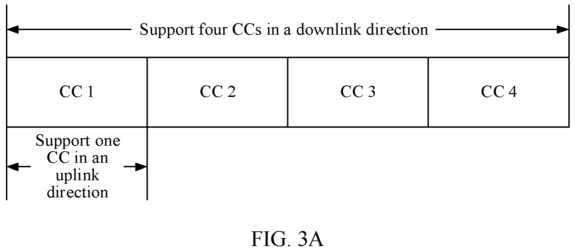

As shown in FIG. 3A, the terminal device can perform downlink carrier aggregation transmission by using four cells, but does not support uplink carrier aggregation transmission. In other words, the terminal device has a sending capability only in a single cell in an uplink direction. To enable the network device to obtain downlink channel information respectively corresponding to the four cells in a downlink direction, the terminal device needs to separately send SRSs in the four cells. The network device separately measures the SRSs in the four cells to obtain corresponding uplink channel information. The network device then determines, based on the uplink channel information corresponding to the four cells, the downlink channel information corresponding to the four cells.

Because the terminal device has the sending capability only in a single cell in the uplink direction, the terminal device has difficulty in sending SRSs in a plurality of cells. To be specific, the terminal device needs to adjust a radio frequency operating parameter of the terminal device, so that a radio frequency operating frequency of the terminal device is adjusted to a frequency band of another cell. In this way, the terminal device can send an SRS in the another cell. In other words, the terminal device needs to sequentially switch the radio frequency operating frequency to each of the plurality of cells, and send a corresponding SRS. However, it takes a period of time for the terminal device to adjust the radio frequency operating frequency parameter, and the terminal device cannot operate in the period of time. Consequently, the terminal device cannot perform uplink and downlink transmission.

In this application, cell handover means that the terminal device switches the radio frequency operating frequency, so that a radio frequency of the terminal device operates at a frequency of a specific cell. The following mainly describes a cell handover manner.

In the existing protocol, the SRS carrier polling technology is used. As shown in FIG. 3A, a terminal device supports uplink transmission in a CC 1, but does not support uplink transmission in a CC 2 to a CC 4. As shown in FIG. 3B, the terminal device first performs handover from the CC 1 to the CC 2. After sending an SRS in the CC 2, the terminal device performs handover back to the CC 1, and then performs handover to the CC 3. After sending an SRS in the CC 3, the terminal device performs handover back to the CC 1, and then performs handover to the CC 4. After sending an SRS in the CC 4, the terminal device performs handover back to the CC 1. It can be learned that each time the terminal device performs handover to one of the CC 2 to the CC 4 and sends an SRS, the terminal device needs to first performs handover back to the CC 1, and cannot consecutively perform handover between a plurality of CCs in the CC 2 to the CC 4. In other words, a cell handover sequence of the terminal device is: CC 1→CC 2→7CC 1→CC 3→CC 1→CC 4→CC 1.

The CC 1 may be referred to as an uplink data transmission cell, and the CC 2 to the CC 4 may be referred to as non-uplink data transmission cells. It can be learned that, between two non-uplink data transmission cells, the terminal device needs to first perform handover back to the uplink data transmission cell, and cannot consecutively perform handover between a plurality of non-uplink data transmission cells. Consequently, a quantity of cell handovers of the terminal device is large. However, during cell handover, the terminal device cannot normally send and receive data. As a result, frequent cell handovers of the terminal device cause a large data transmission loss. In addition, the terminal device needs to first perform handover back to the uplink data transmission cell. This facilitates uplink transmission performed by the terminal device. If handover is consecutively performed between the plurality of non-uplink data transmission cells, uplink transmission cannot be performed in a long period of time. For example, the terminal device cannot perform transmission of the PUCCH and/or the PUSCH, greatly affecting uplink transmission performed by the terminal device.

In view of this, how the terminal device performs cell handover to reduce a quantity of cell handovers and improve data transmission performance is a problem to be resolved in this application. For details, refer to related descriptions in the following embodiments.

The technical solutions in this application are described below with reference to specific embodiments.

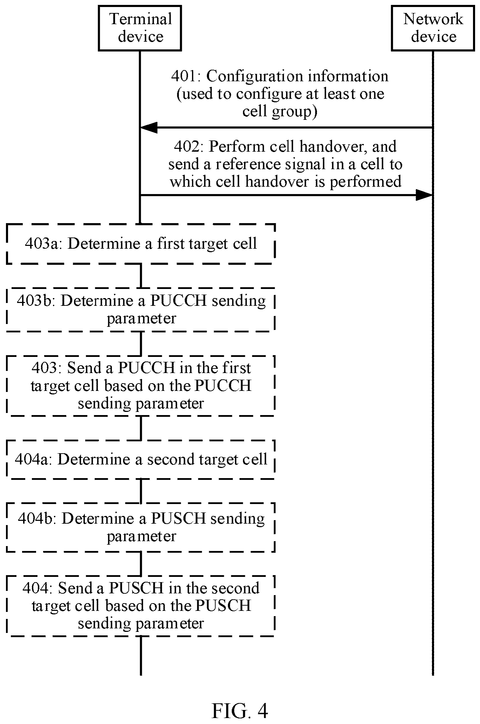

FIG. 4 is a diagram of an embodiment of a cell handover method according to an embodiment of this application. Refer to FIG. 4. The method includes the following steps.

401: A network device sends configuration information to a terminal device, where the configuration information is used to configure at least one cell group. Correspondingly, the terminal device receives the configuration information from the network device.

Each cell group of the at least one cell group includes at least one first-type cell. The at least one first-type cell includes one or more first-type cells. The plurality of first-type cells are of a same type, but are different cells. The first-type cell is a cell for which a PUCCH and/or a PUSCH of the terminal device are/is not configured. In other words, the first-type cell is a secondary cell (secondary cell, SCell) of the terminal device. For example, the network device configures two cell groups for the terminal device, where a 1^{st} cell group is {CC 2, CC 3}, and a 2^{nd} cell group is {CC 4, CC 5}. All the CC 2, the CC 3, the CC 4, and the CC 5 are first-type cells. The CC 2, the CC 3, the CC 4, and the CC 5 are four different cells.

Optionally, each cell group of the at least one cell group further includes at least one second-type cell. The at least one second-type cell includes one or more second-type cells. The plurality of second-type cells are of a same type, but are different cells. The second-type cell is a cell for which the PUCCH and/or the PUSCH of the terminal device are/is configured. In other words, the second-type cell is a primary cell (primary cell, PCell) of the terminal device. For example, the second-type cell of the terminal device is a CC 1. For example, the network device configures two cell groups for the terminal device, where a 1^{st} cell group is {CC 2, CC 3, CC 1}, and a 2^{nd} cell group is {CC 3, CC 4, CC 1}. Alternatively, the at least one cell group includes one or more cell groups including at least one second-type cell. For example, the network device configures two cell groups for the terminal device, where a 1^{st} cell group is {CC 2, CC 3, CC 1}, and a 2^{nd} cell group is {CC 3, CC 4}.

It should be understood that step 401 may alternatively be replaced with that a terminal device determines at least one cell group. The at least one cell group may be preconfigured, determined by the terminal device, or specified in a communication protocol. This is not specifically limited in this application.

402: The terminal device performs cell handover, and sends a reference signal in a cell to which the terminal device performs handover.

Optionally, the reference signal is an SRS or another uplink reference signal. This is not specifically limited in this application.

The following describes some possible implementations in which the terminal device performs cell handover, and sends the reference signal in the cell to which the terminal device performs handover.

Implementation 1: That the terminal device performs cell handover, and sends the reference signal in the cell to which the terminal device performs handover includes at least one of the following: For the at least one cell group, the terminal device sequentially performs handover in a first order to a first-type cell in the at least one cell group for sending a reference signal, where the first order includes a configuration order of the at least one cell group, an index order of the at least one cell group, or a reference signal sending time order of a first-type cell in each cell group of the at least one cell group;
for any cell group of the at least one cell group, the terminal device sequentially performs handover in a second order to at least one first-type cell in the any cell group for sending a reference signal, where the second order includes a configuration order, an index order, or a reference signal sending time order of the at least one first-type cell in the any cell group; or for the at least one cell group including a first cell group and a second cell group, after sending a reference signal in a first-type cell in the first cell group, the terminal device performs handover to at least one second-type cell, and performs handover to a first-type cell in the second cell group for sending a reference signal. The first cell group and the second cell group are any two neighboring cell groups of the at least one cell group that is sorted in the first order. In other words, the first cell group and the second cell group are any two neighboring cell groups of the at least one cell group that is obtained through sorting in the first order. For the second-type cell, refer to the foregoing related descriptions. Optionally, in the at least one cell group sorted in the first order, the first cell group is before or after the second cell group.

In this implementation, each cell group of the at least one cell group includes at least one first-type cell.

For the at least one cell group, the terminal device sequentially performs handover in the first order to a first-type cell in the at least one cell group for sending a reference signal. A handover sequence in which the terminal device performs handover between cell groups is specified. For example, the network device configures two cell groups for the terminal device, where a 1^{st} cell group is {CC 2, CC 3}, and a 2^{nd} cell group is {CC 4, CC 5}. The first order is a front-to-back order of a configuration order of the at least one cell group, where a configuration order of the 1^{st} cell group is before a configuration order of the 2^{nd} cell group. Therefore, the terminal device first performs handover to a first-type cell in the 1^{st} cell group, and the terminal device performs handover to a first-type cell in the 2^{nd} cell group after sending a reference signal in the first-type cell in the 1^{st} cell group. Alternatively, the first order is an ascending order of an index of the at least one cell group, where an index of the 1^{st} cell group is greater than an index of the 2^{nd} cell group. Therefore, the terminal device first performs handover to a first-type cell in the 2^{nd} cell group, and the terminal device performs handover to a first-type cell in the 1^{st} cell group after sending a reference signal in the first-type cell in the 2^{nd} cell group. Alternatively, the first order is a chronological order of reference signal sending time of a first-type cell in each cell group of the at least one cell group, where reference signal sending time of a first-type cell in the 1^{st} cell group is earlier than reference signal sending time of a first-type cell in the 2^{nd} cell group. Therefore, the terminal device first performs handover to a first-type cell in the 1^{st} cell group, and the terminal device performs handover to a first-type cell in the 2^{nd} cell group after sending a reference signal in the first-type cell in the 1^{st} cell group.

It should be noted that, optionally, reference signal sending time of a first-type cell in each cell group of the at least one cell group is preconfigured by the network device. In other words, the reference signal sending time of the first-type cell in each cell group may be preconfigured.

For any cell group of the at least one cell group, the terminal device sequentially performs handover in the second order to at least one first-type cell in the any cell group for sending a reference signal. A handover sequence in which the terminal device performs cell handover between cells in a cell group is specified. For example, the at least one cell includes a cell group {CC 2, CC 3}. The second order is an ascending order of indexes of the cells in the 1^{st} cell group, where an index of the CC 2 is less than an index of the CC 3. Therefore, the terminal device first performs handover to the CC 2, and then performs handover to the CC 3. For another example, the at least one cell includes a cell group {CC 4, CC 5}. The second order is a front-to-back order of configuration orders of the cells in the 2^{nd} cell group, where a configuration order of the CC 4 is before a configuration order of the CC 5. Therefore, the terminal device first performs handover to the CC 4, and then performs handover to the CC 5. For another example, the at least one cell includes a cell group {CC 2, CC 3}. The second order is a front-to-back order of configuration orders of the cells in the 1^{st} cell group, where a configuration order of the CC 2 is before a configuration order of the CC 3. Therefore, the terminal device first performs handover to the CC 2, and then performs handover to the CC 3.

For the first cell group and the second cell group, after the terminal device sends a reference signal in a first-type cell in the first cell group, the terminal device performs handover to at least one second-type cell, and performs handover to a first-type cell in the second cell group for sending a reference signal. For example, the network device configures two cell groups for the terminal device: a cell group {CC 2, CC 3} and a cell group {CC 4, CC 5}. The cell group {CC 2, CC 3} and the cell group {CC 4, CC 5} are sorted based on configuration orders of the cell groups, where the configuration order of the cell group {CC 2, CC 3} is before the configuration order of the cell group {CC 4, CC 5}. The first order is a front-to-back order of a configuration order of the at least one cell group. Therefore, the first cell group may be the cell group {CC 2, CC 3}, and the second cell group may be the cell group {CC 4, CC 5}. The at least one second-type cell includes a CC 1. The terminal device first performs handover from the CC 1 to the cell group {CC 2, CC 3}. After sending a reference signal in a cell in the cell group {CC 2, CC 3}, the terminal device performs handover to the CC 1, and then performs handover to the cell group {CC 4, CC 5}. The terminal device performs handover to the CC 1 after sending a reference signal in a cell in the cell group {CC 4, CC 5}. It can be learned that, the cell handover sequence of the terminal device is: CC 1→CC 2→CC 3→CC 1→CC 4→CC 5→7CC 1. It can be learned that, the terminal device performs cell handover in a cell group manner, and does not need to frequently perform handover to the at least one second-type cell. This reduces a quantity of cell handovers, reduces a data transmission loss, and improves data transmission performance. For the network device, the network device may separately measure reference signals sent by the terminal device in the CC 2, the CC 3, the CC 4, and the CC 5, to obtain corresponding measurement results. The network device determines downlink channel information of each CC based on the measurement result, and determines uplink channel information of each CC based on the downlink channel information of each CC.

The foregoing example is an example in which the terminal device includes one second-type cell. During actual application, the terminal device may include a plurality of second-type cells. In other words, a radio frequency of the terminal device may operate at frequencies of the plurality of second-type cells. Therefore, the terminal device can perform handover to a plurality of first-type cells through one cell handover. Optionally, a bandwidth of the first-type cell is the same as a bandwidth of the second-type cell. For example, the at least one second-type cell includes a CC 1 and a CC 2. The network device configures two cell groups for the terminal device: a cell group {CC 3, CC 4, CC 5, CC 6} and a cell group {CC 7, CC 8}. The cell group {CC 3, CC 4, CC 5, CC 6} and the cell group {CC 7, CC 8} are sorted based on configuration orders of the cell groups. The configuration order of the cell group {CC 3, CC 4, CC 5, CC 6} is before the configuration order of the cell group {CC 7, CC 8}. In other words, the first cell group may be the cell group {CC 3, CC 4, CC 5, CC 6}, and the second cell group may be the cell group {CC 7, CC 8}. The terminal device first performs handover from the CC 1 and the CC 2 to the cell group {CC 3, CC 4, CC 5, CC 6}. After sending a reference signal in a cell in the cell group {CC 3, CC 4, CC 5, CC 6}, the terminal device performs handover to the CC 1 and the CC 2, and then performs handover to the cell group {CC 7, CC 8}. The terminal device performs handover to the CC 1 and the CC 2 after sending a reference signal in a cell in the cell group {CC 7, CC 8}. It can be learned that, the cell handover sequence of the terminal device is: CC 1 and CC 2→CC 3 and CC 4→CC 5 and CC 6→CC 1 and CC 2→CC 7 and CC 8→CC 1 and CC 2. For the network device, the network device may separately measure reference signals sent by the terminal device in the CC 2 to the CC 8, to obtain corresponding measurement results. The network device determines downlink channel information of each CC based on the measurement result, and determines uplink channel information of each CC based on the downlink channel information of each CC.

The foregoing example is an example in which the terminal device can perform handover to two first-type cells through one cell handover. During actual application, when the terminal device can implement a plurality of first-type cells through one cell handover, the terminal device may also choose to perform handover to only a part of the plurality of first-type cells during one cell handover. This is not specifically limited in this application.

Implementation 2: That the terminal device performs cell handover, and sends the reference signal in the cell to which the terminal device performs handover includes at least one of the following: For the at least one cell group, the terminal device sequentially performs handover in a first order to a cell in each cell group of the at least one cell group for sending a reference signal, where the first order includes a configuration order of the at least one cell group, an index order of the at least one cell group, or a reference signal sending time order of a first-type cell in each cell group of the at least one cell group; and/or for any cell group of the at least one cell group, the terminal device sequentially performs handover in a second order to at least one first-type cell in the any cell group for sending a reference signal, where the second order includes a configuration order, an index order, or a reference signal sending time order of the at least one first-type cell in the any cell group. In this implementation, the at least one cell group includes one or more cells including a second-type cell.

For example, the network device configures a cell group {CC 2, CC 3, CC 1} and a cell group {CC 4, CC 5, CC 1} for the terminal device. The CC 1 is a second-type cell, and all the CC 2 to the CC 5 are first-type cells. A configuration order of the cell group {CC 2, CC 3, CC 1} is before a configuration order of the cell group {CC 4, CC 5, CC 1}. The terminal device first performs handover from the CC 1 to the cell group {CC 2, CC 3, CC 1}, and the terminal device performs handover to the cell group {CC 4, CC 5, CC 1} after sending a reference signal in a cell in the cell group {CC 2, CC 3, CC 1}. It can be learned that, the cell handover sequence of the terminal device is: CC 1→CC 2→CC 3→CC 1→CC 4→CC 5→CC 1.

In Implementation 2, optionally, for the at least one cell group including a first cell group and a second cell group, after sending a reference signal in a first-type cell in the first cell group, the terminal device performs handover to at least one second-type cell, and performs handover to a first-type cell in the second cell group for sending a reference signal. The first cell group and the second cell group are any two neighboring cell groups of the at least one cell group that is sorted in the first order. In other words, the first cell group and the second cell group are any two neighboring cells in the at least one sorted cell group. The at least one sorted cell group is obtained by sorting the at least one cell group in the first order. For example, the network device configures a cell group {CC 2, CC 3, CC 1, CC 4, CC 5} and a cell group {CC 7, CC 8} for the terminal device. The CC 1 is a second-type cell, and all the CC 2 to the CC 8 are first-type cells. A configuration order of the cell group {CC 2, CC 3, CC 1, CC 4, CC 5} is before a configuration order of the cell group {CC 7, CC 8}. Therefore, the first cell group may be the cell group {CC 2, CC 3, CC 1, CC 4, CC 5}, and the second cell group may be the cell group {CC 7, CC 8}. The terminal device first performs handover from the CC 1 to the cell group {CC 2, CC 3, CC 1, CC 4, CC 5}. After sending a reference signal in a cell in the cell group {CC 2, CC 3, CC 1, CC 4, CC 5}, the terminal device performs handover to the CC 1, and then performs handover to the cell group {CC 7, CC 8}. The terminal device performs handover to the CC 1 after sending a reference signal in a cell in the cell group {CC 7, CC 8}. It can be learned that, the cell handover sequence of the terminal device is: CC 1→CC 2→CC 3→CC 1→CC 4→CC 5→CC 1→CC 7→CC 8→CC 1.

The foregoing example is an example in which the at least one second-type cell includes one second-type cell. During actual application, the terminal device may include a plurality of second-type cells. In other words, a radio frequency of the terminal device may operate at frequencies of the plurality of second-type cells. For example, the network device configures a cell group {CC 3, CC 4, CC 5, CC 6, CC 1, CC 2} and a cell group {CC 7, CC 8, CC 1, CC 2} for the terminal device. Both the CC 1 and the CC 2 are second-type cells, and all the CC 3 to the CC 8 are first-type cells. A configuration order of the cell group {CC 3, CC 4, CC 5, CC 6, CC 1, CC 2} is before a configuration order of the cell group {CC 7, CC 8, CC 1, CC 2}. Therefore, the first cell may be the cell group {CC 3, CC 4, CC 5, CC 6, CC 1, CC 2}, and the second cell group may be the cell group {CC 7, CC 8, CC 1, CC 2}. The terminal device first performs handover from the CC 1 and the CC 3 to the cell group {CC 3, CC 4, CC 5, CC 6, CC 1, CC 2}, and after sending a reference signal in a cell in the cell group {CC 3, CC 4, CC 5, CC 6, CC 1, CC 2}, the terminal device performs handover to a cell in the cell group {CC 7, CC 8, CC 1, CC 2} for sending a reference signal. It can be learned that, the cell handover sequence of the terminal device is: CC 1 and CC 2→CC 3 and CC 4→CC 5 and CC 6→CC 7 and CC 8→CC 1 and CC 2.

Optionally, a quantity of first-type cells in each cell group may be 2, 3, or 4. This helps reduce a quantity of cell handovers, and on the basis of reducing the quantity of cell handovers, avoid a case in which the terminal device cannot perform handover back to the second-type cell in a long period of time, affecting uplink transmission in the second-type cell.

Optionally, the embodiment shown in FIG. 4 further includes step 403.

403: The terminal device sends the PUCCH in a first target cell based on a PUCCH sending parameter.

The first target cell includes one or more first-type cells of the at least one cell group; and/or the first target cell includes one or more second-type cells.

Specifically, if the terminal device includes one second-type cell, the first target cell may be one first-type cell in the at least one cell group. If the terminal device includes a plurality of second-type cells, the first target cell may be a plurality of first-type cells in the at least one cell group. Optionally, a bandwidth of the first-type cell is the same as a bandwidth of the second-type cell. For example, if the terminal device includes two second-type cells, the first target cell includes two first-type cells.

Optionally, the embodiment shown in FIG. 4 further includes step 403a. Step 403a may be performed before step 403.

403a: The terminal device determines the first target cell.

It should be noted that step 403a and steps 401 and 402 are not subject to a fixed performing sequence. Step 403a may be performed before steps 401 and 402; steps 401 and 402 may be performed before step 403a; or step 403a and steps 401 and 402 may be simultaneously performed based on a situation. This is not specifically limited in this application.

Some possible implementations of step 403a are described below. This application is still applicable to another implementation. This is not specifically limited in this application.

Implementation 1: The network device sends first indication information to the terminal device, where the first indication information indicates the first target cell. The terminal device receives the first indication information from the network device.

Optionally, the first indication information is carried in RRC signaling, a MAC CE, or DCI.

Optionally, the first indication information indicates a cell identifier of the first target cell. In a possible implementation, the cell identifier of the first target cell is a local identifier of the first target cell in a cell group in which the first target cell is located. For example, the first target cell is a CC 2, and a cell group in which the CC 2 is located is a cell group {CC 2, CC 3, CC 4, CC 5}. A local identifier of the CC 2 in the cell group is 0. A local identifier of the CC 3 in the cell group is 1. A local identifier of the CC 4 in the cell group is 2. A local identifier of the CC 5 in the cell group is 3.

Optionally, the first target cell is any one or more first-type cells of the cell group in which the first target cell is located.

Implementation 2: The terminal device receives second indication information from the network device, where the second indication information indicates a sending slot of the PUCCH. The terminal device uses, as the first target cell, a cell in which the terminal device is located in the sending slot. The terminal device performs cell handover in the manner shown in step 402, and sends a reference signal in a cell to which the terminal device performs handover. The cell to which the terminal device performs handover in the sending slot is the first target cell. In other words, the cell in which the terminal device is located in the sending slot is the first target cell.

Implementation 3: The terminal device receives second indication information from the network device, where the second indication information indicates a sending slot of the PUCCH. If the sending slot is not an available slot, the terminal device determines a 1^{st} available slot after the sending slot, and uses, as the first target cell, a cell in which the terminal device is located in the 1^{st} available slot. In other words, the terminal device performs cell handover in the manner shown in step 402, and sends a reference signal in a cell to which the terminal device performs handover. The cell to which the terminal device performs handover in the 1^{st} available slot after the sending slot is the first target cell. In other words, the cell in which the terminal device is located in the 1^{st} available slot after the sending slot is the first target cell.

Alternatively, if the sending slot is an available slot, the terminal device uses, as the first target cell, a cell in which the terminal device is located in the sending slot. In other words, a cell to which the terminal device performs handover or in which the terminal device is located in the sending slot is the first target cell.

Optionally, in Implementation 2 and Implementation 3, the second indication information is carried in RRC signaling, a MAC CE, or DCI.

It should be noted that, if the sending slot is not an available slot, the terminal device may alternatively determine an available slot of the sending slot based on the sending slot, and use, as the first target cell, a cell in which the terminal device is located in the available slot. For example, the available slot may be an a^{th} available slot after the sending slot. a is an integer greater than or equal to 1. For example, a is equal to 2 or 3. Certainly, an upper limit of a is also correspondingly limited, and may be specifically specified by the network device or specified in a communication protocol. In this way, it is ensured that the terminal device feeds back, in a timely manner, the PUCCH carrying CSI, so that normal communication between the terminal device and the network device is ensured.

Optionally, the available slot is a slot that meets a first condition, and the first condition includes one or more of the following:
1. The available slot is an uplink slot.
   Specifically, the available slot is a slot that can be used for uplink transmission, and therefore, the available slot needs to be an uplink slot.
2. The available slot is not in a cell handover time period of the terminal device.
   Specifically, in the cell handover time period of the terminal device, the terminal device switches an operating frequency of the radio frequency. Consequently, the terminal device cannot perform uplink and downlink transmission. Therefore, the available slot is not in the cell handover time period.
3. No reference signal is sent in the available slot.
4. A reference signal is sent in the available slot, and a time-frequency resource for sending the reference signal does not conflict with a time-frequency resource for sending the PUCCH.
5. A priority of a reference signal in the available slot is lower than a priority of the PUCCH.

Specifically, in this implementation, the terminal device may cancel transmission of the reference signal in the available slot. Alternatively, the terminal device may translate a slot in which the reference signal is located, to avoid a conflict between sending of the reference signal and sending of the PUCCH. For example, the terminal device translates the slot in which the reference signal is located forward or backward. For example, the terminal device translates the slot in which the reference signal is located to a next available uplink slot of the slot. The available uplink slot means that no uplink channel and/or uplink data is sent in the available uplink slot; or in the available uplink slot, a time-frequency resource occupied by an uplink channel and/or uplink data does not conflict with a time-frequency resource occupied by the reference signal. Alternatively, the terminal device may translate a time-domain symbol in which the reference signal is located. For example, in a slot in which the reference signal is located, the terminal device translates the time-domain symbol in which the reference signal is located forward or backward. For example, in the slot in which the reference signal is located, the terminal device translates the time-domain symbol in which the reference signal is located backward to a next available uplink time-domain symbol. The available uplink time-domain symbol means that no uplink channel and/or uplink data is sent in the available uplink time-domain symbol; or in the available uplink time-domain symbol, a time-frequency resource occupied by an uplink channel and/or uplink data does not conflict with a time-frequency resource occupied by the reference signal.

The descriptions are provided above in a case in which the priority of the reference signal in the available slot is lower than the priority of the PUCCH. When the priority of the reference signal in the slot is higher than the priority of the PUCCH, the terminal device may cancel transmission of the PUCCH, or the terminal device may translate a slot or time-domain symbol in which the PUCCH is located. A specific translation manner is similar to the foregoing manner in which the terminal device translates the slot or time-domain symbol in which the reference signal is located. For details, refer to the foregoing descriptions.

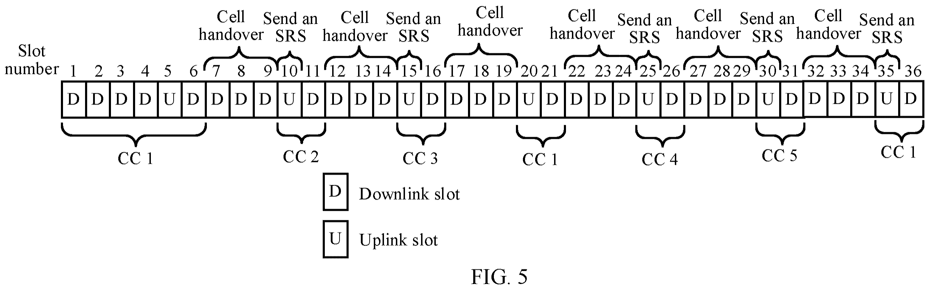

For example, as shown in FIG. 5, the sending slot indicated by the second indication information is a slot 9, and the slot 9 is a downlink slot. Therefore, the slot 9 is not an available slot. The terminal device determines a 1^{st} available slot after the slot 9. It can be learned from FIG. 5 that the 1^{st} available slot after the slot 9 is a slot 10. The slot 10 is an uplink slot, and in the slot 10, a time-frequency resource occupied by an SRS does not conflict with a time-frequency resource occupied by the PUCCH. It can be learned from FIG. 5 that a cell in which the terminal device is located in the slot 10 is a CC 2. Therefore, the terminal device uses the CC 2 as the first target cell.

In this implementation, optionally, the PUCCH carries the CSI, or carries HARQ feedback information of a PDSCH.

Implementation 4: The PUCCH carries CSI. The terminal device determines a sending slot that is configured by the network device and that is for sending the PUCCH, and if the sending slot is an available slot, the terminal device uses, as the first target cell, a cell in which the terminal device is located in the sending slot, where the cell in which the terminal device is located in the sending slot may be understood as a cell in which the terminal device is located or to which the terminal device performs handover in the sending slot; or if the sending slot is not an available slot, the terminal device determines a 1^{st} available slot after the sending slot, and uses, as the first target cell, a cell in which the terminal device is located in the 1^{st} available slot, where the cell in which the terminal device is located in the 1^{st} available slot may be understood as a cell in which the terminal device is located or to which the terminal device performs handover in the 1^{st} available slot.

For the available slot, refer to the foregoing related descriptions. Details are not described herein again.

Implementation 5: The PUCCH carries HARQ feedback information of a PDSCH. The terminal device determines a 1^{st} available slot present after a preset time offset is added to receiving time or sending time of the PDSCH, and uses, as the first target cell, a cell in which the terminal device is located in the 1^{st} available slot. The cell in which the terminal device is located in the 1^{st} available slot may be understood as a cell in which the terminal device is located or to which the terminal device performs handover in the 1^{st} available slot. Alternatively, the terminal device determines an available slot based on receiving time or sending time of the PDSCH and a preset time offset, and uses, as the first target cell, a cell in which the available slot is located. For example, the available slot is an a^{th} available slot present after the preset time offset is added to the receiving time or sending time of the PDSCH. a is an integer greater than or equal to 1. For example, a is equal to 2 or 3. Certainly, an upper limit of a is also correspondingly limited, and may be specifically specified by the network device or specified in a communication protocol. In this way, it is ensured that the terminal device feeds back, in a timely manner, the PUCCH carrying the HARQ feedback information of the PDSCH. This helps ensure normal communication between the terminal device and the network device.

For example, as shown in FIG. 5, the preset time offset is two slots. For the PDSCH sent by the network device to the terminal device in a slot 6, a slot 8 is later than the slot 6 by two slots. The slot 8 is a downlink slot. Therefore, the slot 8 is not an available slot. The terminal device may determine that a 1^{st} available slot after the slot 8 is a slot 10. A cell in which the terminal device is located in the slot 10 is a CC 2. Therefore, the terminal device uses the CC 2 as the first target cell.

Optionally, the preset time offset is indicated by the network device to the terminal device, determined by the terminal device based on a capability of the terminal device, specified in a communication protocol, or calculated according to a criterion specified in a communication protocol. For example, the preset time offset may be indicated by the network device by using the DCI for scheduling the PDSCH of the terminal device. Optionally, the capability of the terminal device includes a PDSCH demodulation capability of the terminal device. For example, the preset time offset may be several slots, several time-domain symbols, or several milliseconds. This is not specifically limited in this application.

Optionally, the PUCCH sending parameter includes at least one of the following: a sending slot of the PUCCH, a frequency-domain resource of the PUCCH, a path loss measurement resource of the PUCCH, or a TA of the PUCCH.

The sending slot of the PUCCH is a sending slot that is in the first target cell and that is for sending the PUCCH. The frequency-domain resource of the PUCCH is a frequency-domain resource that is in the first target cell and that is for sending the PUCCH. The path loss measurement resource of the PUCCH is used by the terminal device to measure, on the path loss measurement resource, a path loss reference signal from the first target cell to obtain a path loss value, and determine, based on the path loss value, a transmit power for sending the PUCCH. The TA of the PUCCH is used by the terminal device to send the PUCCH in advance based on the TA.

Optionally, the embodiment shown in FIG. 4 further includes step 403b. Step 403b may be performed before step 403.

403b: The terminal device determines the PUCCH sending parameter.

It should be noted that step 403b and steps 401 and 402 are not subject to a fixed performing sequence. Step 403b may be performed before steps 401 and 402; steps 401 and 402 may be performed before step 403b; or step 403b and steps 401 and 402 may be simultaneously performed based on a situation. This is not specifically limited in this application. If the embodiment shown in FIG. 4 further includes step 403a, 403a and 403b are not subject to a fixed performing sequence. Step 403a may be performed before step 403b, step 403b may be performed before step 403a, or step 403a and step 403b may be simultaneously performed based on a situation. This is not specifically limited in this application.

Some possible implementations in which the terminal device determines the sending slot of the PUCCH are described below. This application is still applicable to another implementation. This is not specifically limited in this application.

Implementation 1: The terminal device receives second indication information from the network device. The second indication information indicates a sending slot of the PUCCH.

Specifically, the terminal device may use the sending slot indicated by the second indication information as the sending slot of the PUCCH.

Implementation 2: The terminal device receives second indication information from the network device. The second indication information indicates a sending slot of the PUCCH. If the sending slot is an available slot, the terminal device uses the sending slot as the sending slot of the PUCCH; or if the sending slot is not an available slot, the terminal device uses a 1^{st} available slot after the sending slot as the sending slot of the PUCCH.

For the first condition that the available slot meets, refer to the foregoing related descriptions. Details are not described herein again.

For example, as shown in FIG. 5, the second indication information indicates a slot 10, the slot 10 is an uplink slot, and a time-frequency resource occupied by an SRS in the slot 10 does not conflict with a time-frequency resource occupied by the PUCCH in the slot 10. Therefore, the terminal device may use the slot 10 as the sending slot of the PUCCH.

For another example, the second indication information indicates a slot 6, and the slot 6 is a downlink slot. Therefore, the slot 6 is not an available slot. The terminal device determines a 1^{st} available slot after the slot 6. It can be learned from FIG. 5 that the 1^{st} available slot after the slot 6 is a slot 10. The slot 10 is an uplink slot, and a time-frequency resource occupied by an SRS in the slot 10 does not conflict with a time-frequency resource occupied by the PUCCH in the slot 10. Therefore, the terminal device may use the slot 10 as the sending slot of the PUCCH.

Implementation 3: The PUCCH carries CSI. The terminal device determines a sending slot that is configured by the network device and that is for sending the PUCCH. If the sending slot is an available slot, the terminal device uses the sending slot as the sending slot of the PUCCH; or if the sending slot is not an available slot, the terminal device uses a 1^{st} available slot after the sending slot as the sending slot of the PUCCH.

For the first condition that the available slot meets, refer to the foregoing related descriptions. Details are not described herein again.

Implementation 4: The PUCCH carries HARQ feedback information of a PDSCH. The terminal device determines a 1^{st} available slot present after a preset time offset is added to sending time or receiving time of the PDSCH, and uses the 1^{st} available slot as the sending slot of the PUCCH.

For the preset time offset, refer to the foregoing related descriptions. Details are not described herein again.

For example, as shown in FIG. 5, the preset time offset is two slots. For the PDSCH sent by the network device to the terminal device in a slot 13, a slot 15 is later than the slot 13 by two slots. The slot 15 is an uplink slot, and in the slot 15, a time-frequency resource occupied by an SRS does not conflict with a time-frequency resource occupied by the PUCCH. Therefore, the slot 15 is an available slot. The terminal device may determine the slot 15 as the sending slot of the PUCCH.

Some possible implementations in which the terminal device determines the frequency-domain resource of the PUCCH are described below. This application is still applicable to another implementation. This is not specifically limited in this application.

Optionally, that the terminal device determines the frequency-domain resource of the PUCCH includes: The terminal device determines, based on a number of a start RB and a quantity of RBs that are configured or indicated by the network device for the PUCCH, numbers of all RBs for sending the PUCCH. The terminal device determines, based on the numbers of all the RBs, an RB that is in the first target cell and that is for sending the PUCCH. Alternatively, the terminal device determines, based on a number of a start RB and a quantity of RBs that are configured or indicated by the network device for the PUCCH, numbers of all RBs for sending the PUCCH.

For example, the number of the start RB configured by the network device for the PUCCH is 0, and the quantity of RBs is 5. Therefore, it can be learned that the numbers of all the RBs used for the PUCCH are 0, 1, 2, 3, and 4. Therefore, the terminal device may use the RB 0 to the RB 4 in the first target cell as the RBs for sending the PUCCH.

Some possible implementations in which the terminal device determines the path loss measurement resource of the PUCCH are described below. This application is still applicable to another implementation. This is not specifically limited in this application.

Optionally, that the terminal device determines the path loss measurement resource of the PUCCH includes: The terminal device determines a number of a path loss measurement resource configured or indicated by the network device for the PUCCH. The terminal device determines, based on the number of the path loss measurement resource, the path loss measurement resource that is in the first target cell and that is for sending the PUCCH.

For example, the number of the path loss measurement resource configured by the network device for the PUCCH is 7. In this case, the terminal device may use the path loss measurement resource numbered 7 in the first target cell as the path loss measurement resource of the PUCCH. The terminal device measures a path loss reference signal on the path loss measurement resource numbered 7 in the first target cell, to obtain a path loss value. The terminal device compensates for a transmit power of the PUCCH based on the path loss value. In this way, the network device in the first target cell successfully receives the PUCCH.

Some possible implementations in which the terminal device determines the TA of the PUCCH are described below. This application is still applicable to another implementation. This is not specifically limited in this application.

In a possible implementation, if the first target cell has one TA, the terminal device uses the TA as the TA of the PUCCH. Alternatively, if the first target cell corresponds to one TAG, the terminal device uses a TA corresponding to the TAG as the TA of the PUCCH. That the first target cell corresponds to one TAG means that the TAG is configured for the first target cell, and a TA corresponding to the TAG is the TA of the first target cell.

In another possible implementation, if the first target cell has two TAs, and the two TAs are TAs respectively corresponding to two TAGs corresponding to the first target cell, when the first target cell has two TAs, this application provides two possible implementations in which the terminal device determines the TA of the PUCCH. Alternatively, if the first target cell corresponds to two TAGs, this application provides two possible implementations in which the terminal device determines the TA of the PUCCH. Each of the two TAGs corresponds to one TA.

Implementation 1: If a second-type cell that is in the at least one second-type cell and for which the PUCCH is configured uses one TA, the terminal device uses a 1^{st} TA in the two TAs as the TA of the PUCCH. The 1^{st} TA is a TA corresponding to a 1^{st} TAG or a TAG with a smaller identifier in the two TAGs. Alternatively, the 1^{st} TA is a TA corresponding to a 2^{nd} TAG or a TAG with a larger identifier in the two TAGs.

Implementation 1 may be replaced with the following descriptions: A cell for which the PUCCH is configured corresponds to one TAG, and when transmitting the PUCCH in the first target cell, the terminal device uses a TA corresponding to a 1^{st} TAG or a TAG with a smaller identifier in the two TAGs as the TA of the PUCCH. Alternatively, a cell for which the PUCCH is configured corresponds to one TAG, and when the terminal device transmits the PUCCH in the first target cell, the TA of the PUCCH is a TA corresponding to a 1^{st} TAG or a TAG with a smaller identifier in the two TAGs. The cell for which the PUCCH is configured is the second-type cell that is in the at least one second-type cell and for which the PUCCH is configured. A cell of the PUCCH corresponds to one TAG may alternatively be that the second-type cell uses one TA.

Implementation 2: If a second-type cell that is in the at least one second-type cell and for which the PUCCH is configured uses two TAs, the terminal device determines a TAG identifier corresponding to a TA used by the PUCCH in the second-type cell, and the terminal device uses a TA corresponding to the TAG identifier in the first target cell as the TA of the PUCCH.

Implementation 2 may be replaced with the following descriptions: A cell for which the PUCCH is configured corresponds to two TAGs and the PUCCH corresponds to one TAG of the two TAGs, and when transmitting the PUCCH in the first target cell, the terminal device uses, as the TA of the PUCCH, a TA corresponding to a TAG that is in the two TAGs corresponding to the first target cell and that has a same identifier as one of the TAGs. Alternatively, a cell for which the PUCCH is configured corresponds to two TAGs and the PUCCH corresponds to one TAG of the two TAGs, and when the terminal device transmits the PUCCH in the first target cell, the TA of the PUCCH is a TA corresponding to a TAG that is in the two TAGs corresponding to the first target cell and that has a same identifier as one of the TAGs.

The cell for which the PUCCH is configured is the second-type cell that is in the at least one second-type cell and for which the PUCCH is configured. A cell of the PUCCH corresponds to one TAG may alternatively be that the second-type cell uses two TAs.

Optionally, a TAG corresponding to the cell for which the PUCCH is configured is determined based on a TCI state or spatial relation parameter used by the PUCCH. Each TCI state or each spatial relation parameter is associated with one TAG identifier. The TAG identifier belongs to two TAG identifiers corresponding to the first target cell. A TA corresponding to a TAG identifier associated with the TCI state or spatial relation parameter used by the PUCCH is the TA of the PUCCH.

It should be noted that step 403 may be performed after step 402, or step 403 may not depend on a process of steps 401 and 402. In other words, step 403 may be used as an independent solution. The terminal device may use another cell handover solution. Steps 401 and 402 are merely a possible cell handover manner. For example, the terminal device may use the cell handover solution shown in FIG. 3B, and then perform step 403. This is not specifically limited in this application.

It can be learned from step 403 that the terminal device may send the PUCCH in the first target cell. In this way, it is ensured that uplink transmission in the second-type cell is not affected. In other words, a problem that the terminal device cannot perform uplink transmission in a long period of time because the terminal device consecutively performs handover between a plurality of first-type cells is avoided. The terminal device may send, by using a resource in the first-type cell, the second-type cell that is in the at least one second-type cell and for which the PUCCH is configured. This improves flexibility of sending the PUCCH.

Optionally, the embodiment shown in FIG. 4 further includes step 404.

404: The terminal device sends the PUSCH in a second target cell based on a PUSCH sending parameter.

The second target cell includes one or more first-type cells of the at least one cell group; and/or the second target cell may include one or more second-type cells.

If the terminal device includes one second-type cell, the second target cell may be one first-type cell in the at least one cell group. If the terminal device includes a plurality of second-type cells, the second target cell may be a plurality of first-type cells in the at least one cell group. Optionally, a bandwidth of the first-type cell is the same as a bandwidth of the second-type cell. For example, if the terminal device includes two second-type cells, the second target cell includes two first-type cells.

Step 404 may be performed after step 402, or step 404 may not depend on a process of steps 401 and 402. In other words, step 404 may be used as an independent solution. The terminal device may use another cell handover solution. Steps 401 and 402 are merely a possible cell handover manner. For example, the terminal device may use the cell handover solution shown in FIG. 3B, and then perform step 404. This is not specifically limited in this application.

It should be noted that step 403 and step 404 are not subject to a fixed performing sequence. Step 403 may be performed before step 404; step 404 may be performed before step 403; or step 403 and step 404 may be simultaneously performed based on a situation. This is not specifically limited in this application.

Optionally, the embodiment shown in FIG. 4 further includes step 404a. Step 404a may be performed before step 404.

404a: The terminal device determines the second target cell.

Some possible implementations of step 404a are described below. This application is still applicable to another implementation. This is not specifically limited in this application.

Implementation 1: The network device sends third indication information to the terminal device, where the third indication information indicates the second target cell. The terminal device receives the third indication information from the network device.

The third indication information is carried in RRC signaling, a MAC CE, or DCI. For example, the DCI is used to schedule the PUSCH, and the DCI includes the third indication information. For example, the PUSCH is a scheduling-free PUSCH, the third indication information is carried in the RRC signaling, and the RRC signaling is used to configure the PUSCH.

Optionally, the third indication information indicates a cell identifier of the second target cell. The cell identifier of the second target cell is similar to the cell identifier of the first target cell. For details, refer to the foregoing related descriptions. The second target cell is any one or more first-type cells in the cell group in which the second target cell is located.

Implementation 2: The terminal device receives fourth indication information from the network device. The fourth indication information indicates a sending slot of the PUSCH. The terminal device uses, as the second target cell, a cell in which the terminal device is located in the sending slot. The terminal device performs cell handover in the manner shown in step 402, and sends a reference signal in a cell to which the terminal device performs handover. The cell to which the terminal device performs handover in the sending slot is the second target cell. In other words, the cell in which the terminal device is located in the sending slot is the second target cell.

Implementation 3: The terminal device receives fourth indication information from the network device. The fourth indication information indicates a sending slot of the PUSCH. If the sending slot is not an available slot, the terminal device determines a 1^{st} available slot after the sending slot, and uses, as the second target cell, a cell in which the 1^{st} available slot is located. In other words, the terminal device performs cell handover in the manner shown in step 402, and sends a reference signal in a cell to which the terminal device performs handover. The cell to which the terminal device performs handover in the 1^{st} available slot after the sending slot is the second target cell. In other words, the cell in which the terminal device is located in the 1^{st} available slot after the sending slot is the second target cell.

Alternatively, if the sending slot is an available slot, the terminal device uses, as the second target cell, a cell in which the terminal device is located in the sending slot. In other words, a cell to which the terminal device performs handover or in which the terminal device is located in the sending slot is the second target cell.

For the available slot, refer to the foregoing related descriptions. Details are not described herein again.

Optionally, the fourth indication information is carried in RRC signaling, a MAC CE, or DCI.

A related example of Implementation 3 is similar to the example of Implementation 3 in step 403a in which the terminal device determines the first target cell. For details, refer to the foregoing related descriptions.

It should be noted that step 404a and steps 401 and 402 are not subject to a fixed performing sequence. Step 404a may be performed before steps 401 and 402; steps 401 and 402 may be performed before step 404a; or step 403a and steps 401 and 402 may be simultaneously performed based on a situation. This is not specifically limited in this application. Optionally, if the embodiment shown in FIG. 4 further includes steps 403a to 403, step 404a and steps 403a to 403 are not subject to a fixed performing sequence. Steps 403a to 403 may be performed before step 404a; step 404a may be performed before steps 403a to 403; or steps 403a to 403 and step 404 may be simultaneously performed based on a situation. This is not specifically limited in this application.

Optionally, the PUSCH sending parameter includes at least one of the following: a sending slot of the PUSCH, a frequency-domain resource of the PUSCH, a path loss measurement resource of the PUSCH, or a TA of the PUSCH.

Optionally, the embodiment shown in FIG. 4 further includes step 404b. Step 404b may be performed before step 404.

404b: The terminal device determines the PUSCH sending parameter.

It should be noted that step 404b and steps 401 and 402 are not subject to a fixed performing sequence. Step 404b may be performed before steps 401 and 402; steps 401 and 402 may be performed before step 404b; or step 404b and steps 401 and 402 may be simultaneously performed based on a situation. This is not specifically limited in this application. Optionally, if the embodiment shown in FIG. 4 further includes steps 403a to 403, step 404b and steps 403a to 403 are not subject to a fixed performing sequence. Steps 403a to 403 may be performed before step 404b; step 404b may be performed before steps 403a to 403; or steps 404b to 403 and step 404 may be simultaneously performed based on a situation. This is not specifically limited in this application.

It should be understood that, optionally, step 404a and step 404b are not subject to a fixed performing sequence. Step 404a may be performed before step 404b, step 404b may be performed before step 404a, or step 404a and step 404b are simultaneously performed based on a situation. This is not specifically limited in this application.

Two possible implementations in which the terminal device determines the sending slot of the PUSCH are described below. This application is still applicable to another implementation. This is not specifically limited in this application.

In a possible implementation, the terminal device receives fourth indication information from the network device. The fourth indication information indicates a sending slot of the PUSCH.

Specifically, the terminal device may use the sending slot indicated by the fourth indication information as the sending slot of the PUSCH.

In another possible implementation, the terminal device receives fourth indication information from the network device. The fourth indication information indicates a sending slot of the PUSCH. If the sending slot is an available slot, the terminal device uses the sending slot as the sending slot of the PUSCH, or if the sending slot is not an available slot, the terminal device uses a 1^{st} available slot after the sending slot as the sending slot of the PUSCH. The 1^{st} available slot after the sending slot is not limited to the sending slot of the PUSCH. During actual application, an available slot after the sending slot is the sending slot of the PUSCH, for example, a 2^{nd} available slot or a 3^{rd} available slot after the sending slot.

For the first condition that the available slot meets, refer to the foregoing related descriptions. Details are not described herein again.

A related example of the implementation is similar to the example of Implementation 2 in step 403b in which the terminal device determines the sending slot of the PUCCH. For details, refer to the foregoing related descriptions.

Optionally, before step 404, the terminal device determines the frequency-domain resource of the PUSCH. Specifically, a process in which the terminal device determines the frequency-domain resource of the PUSCH is similar to the foregoing process in which the terminal device determines the frequency-domain resource of the PUCCH. For details, refer to the foregoing related descriptions. The details are not described herein again.

Optionally, before step 403, the terminal device determines the TA of the PUSCH. It should be noted that, a process in which the terminal device determines the TA of the PUSCH is similar to the foregoing process in which the terminal device determines the TA of the PUCCH. For details, refer to the foregoing related descriptions. The details are not described herein again.

It can be learned from step 404 that the terminal device may send the PUSCH in the second target cell. In this way, it is ensured that uplink transmission in the second-type cell is not affected. In other words, a problem that the terminal device cannot perform uplink transmission in a long period of time because the terminal device consecutively performs handover between a plurality of first-type cells is avoided. The terminal device may send the PUSCH of the second-type cell by using a resource in the first-type cell. This improves PUSCH sending flexibility.

In the technical solutions in this application, the network device configures at least one cell group for the terminal device. The terminal device performs cell handover. For the at least one cell group, the terminal device sequentially performs handover in the first order to a first-type cell in each cell group of the at least one cell group for sending a reference signal. For any cell group of the at least one cell group, the terminal device sequentially performs handover in the second order to at least one first-type cell in the any cell group for sending a reference signal. However, between the first cell group and the second cell group, the terminal device needs to perform handover back to the at least one second-type cell. In this way, the terminal device performs cell handover in a cell group manner. This helps reduce a quantity of cell handovers, avoid a large data transmission loss caused by frequent cell handovers of the terminal device, and improve data transmission performance.

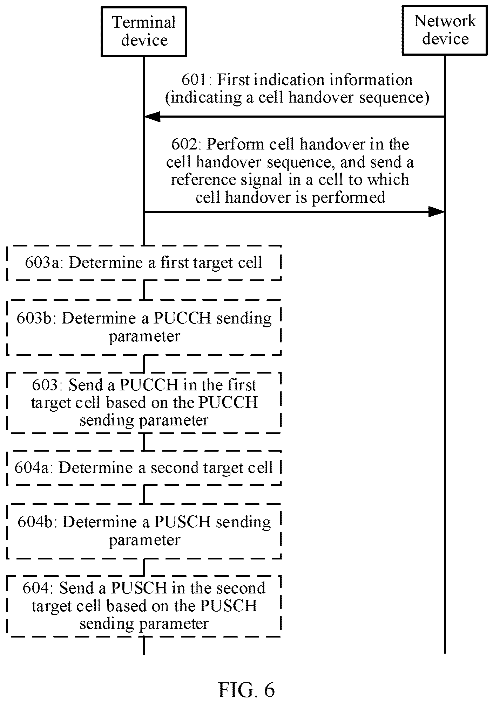

FIG. 6 is a diagram of another embodiment of a cell handover method according to an embodiment of this application. Refer to FIG. 6. The method includes the following steps.

601: A network device sends first indication information to a terminal device. The first indication information indicates a cell handover sequence. Correspondingly, the terminal device receives the first indication information from the network device.

The cell handover sequence is a handover sequence of at least one first-type cell and at least one second-type cell of the terminal device. The at least one first-type cell is a cell for which a physical uplink control channel PUCCH and/or a physical uplink shared channel PUSCH of the terminal device are/is not configured. The at least one second-type cell is a cell for which the PUCCH and/or the PUSCH of the terminal device are/is configured. In other words, the at least one first-type cell is a secondary cell of the terminal device, and the at least one second-type cell is a primary cell of the terminal device.

Optionally, the at least one second-type cell includes one or more second-type cells. When the at least one second-type cell includes one second-type cell, it indicates that a radio frequency of the terminal device may operate at a frequency of the second-type cell. When the at least one second-type cell includes a plurality of second-type cells, it indicates that a radio frequency of the terminal device may operate at frequencies of the plurality of second-type cells. In this application, optionally, a bandwidth of the first-type cell is the same as or different from a bandwidth of the second-type cell. Descriptions are provided below mainly by using an example in which the bandwidth of the first-type cell is the same as the bandwidth of the second-type cell.

For example, the at least one first-type cell includes a CC 2, a CC 3, a CC 4, and a CC 5. The at least one second-type cell includes a CC 1. The cell handover sequence is: CC 1→CC 2→CC3→CC1→CC4→CC5→CC1.

For another example, the at least one first-type cell includes a CC 3, a CC 4, a CC 5, and a CC 6. The at least one second-type cell includes a CC 1 and a CC 2. The cell handover sequence is: CC 1 and CC 2→CC 3 and CC 4→CC 5 and CC 6→CC 1 and CC 2. In other words, each time the terminal device adjusts an operating frequency of the radio frequency, the terminal device may perform handover to two cells. When the terminal device can perform handover to a plurality of cells through one cell handover, a quantity of cells to which the terminal device performs handover once is not limited in this application. For example, the terminal device can perform handover to two cells through one cell handover, but the terminal device may perform handover to only one cell during a cell handover.

Optionally, the at least one first-type cell and the at least one second-type cell each may be represented by using a cell identifier.

602: The terminal device performs cell handover in the cell handover sequence, and sends a reference signal in a cell to which the terminal device performs handover.

Optionally, the reference signal is an SRS or another uplink reference signal. This is not specifically limited in this application.

For example, the at least one first-type cell includes a CC 2, a CC 3, a CC 4, and a CC 5. The at least one second-type cell includes a CC 1. The cell handover sequence is: CC 1→CC 2→CC 3→CC 1→CC 4→CC 5→CC 1. The terminal device performs handover from the CC 1 to the CC 2. The terminal device performs handover to the CC 3 after sending a reference signal in the CC 2. The terminal device performs handover back to the CC 1 after sending a reference signal in the CC 3. Then, the terminal device performs handover to the CC 4. The terminal device performs handover to the CC 5 after sending a reference signal in the CC 4. The terminal device performs handover back to the CC 1 after sending a reference signal in the CC 5. For the network device, the network device may separately measure reference signals sent by the terminal device in the CC 2, the CC 3, the CC 4, and the CC 5, to obtain corresponding measurement results. The network device determines downlink channel information of each CC based on the measurement result, and determines uplink channel information of each CC based on the downlink channel information of each CC.

Optionally, the embodiment shown in FIG. 6 further includes step 603.

603: The terminal device sends the PUCCH in a first target cell based on a PUCCH sending parameter.

Step 603 is similar to step 403 in the embodiment shown in FIG. 4. For details, refer to the related descriptions of step 403 in the embodiment shown in FIG. 4. The details are not described herein again.

Optionally, the embodiment shown in FIG. 6 further includes step 603a. Step 603a may be performed before step 603.

603a: The terminal device determines the first target cell.

Step 603a is similar to step 403a in the embodiment shown in FIG. 4. For details, refer to the related descriptions of step 403a in the embodiment shown in FIG. 4.

It should be noted that step 603a and steps 601 and 602 are not subject to a fixed performing sequence. Step 603a may be performed before steps 601 and 602; steps 601 and 602 may be performed before step 603a; or step 603a and steps 601 and 602 may be simultaneously performed based on a situation. This is not specifically limited in this application.

Optionally, the embodiment shown in FIG. 6 further includes step 603b. Step 603b may be performed before step 603.

603b: The terminal device determines the PUSCH sending parameter.

It should be noted that step 603b and steps 601 and 602 are not subject to a fixed performing sequence. Step 603b may be performed before steps 601 and 602; steps 601 and 602 may be performed before step 603b; or step 603b and steps 601 and 602 may be simultaneously performed based on a situation. This is not specifically limited in this application. Optionally, if the embodiment shown in FIG. 6 further includes step 603a, step 603a and step 603b are not subject to a fixed performing sequence. Step 603a may be performed before step 603b, step 603b may be performed before step 603a, or step 603a and step 603b are simultaneously performed based on a situation. This is not specifically limited in this application.

Optionally, the embodiment shown in FIG. 6 further includes step 604.

604: The terminal device sends the PUSCH in a second target cell based on a PUSCH sending parameter.

Step 603 is similar to step 404 in the embodiment shown in FIG. 4. For details, refer to the related descriptions of step 404 in the embodiment shown in FIG. 4. The details are not described herein again.

Step 604 is similar to step 404 in the embodiment shown in FIG. 4. For details, refer to the related descriptions of step 404 in the embodiment shown in FIG. 4. The details are not described herein again.

Optionally, the embodiment shown in FIG. 6 further includes step 604a. Step 604a may be performed before step 604.

604a: The terminal device determines the second target cell.

Step 604a is similar to step 404a in the embodiment shown in FIG. 4. For details, refer to the related descriptions of step 404a in the embodiment shown in FIG. 4. The details are not described herein again.

Optionally, the embodiment shown in FIG. 6 further includes step 604b. Step 604b may be performed before step 604.

604b: The terminal device determines the PUSCH sending parameter.

Step 604b is similar to step 404b in the embodiment shown in FIG. 4. For details, refer to the related descriptions of step 404b in the embodiment shown in FIG. 4. The details are not described herein again.

In this embodiment of this application, the terminal device receives first indication information from the network device. The first indication information indicates a cell handover sequence. The cell handover sequence is a handover sequence of the at least one first-type cell and the at least one second-type cell of the terminal device. The at least one first-type cell is a cell for which the PUCCH and/or the PUSCH of the terminal device are/is not configured. The at least one second-type cell is a cell for which the PUCCH and/or the PUSCH of the terminal device are/is configured. The terminal device performs cell handover in the cell handover sequence, and sends a reference signal in a cell to which the terminal device performs handover. In this way, the terminal device performs cell handover in the cell handover sequence indicated by the network device. This helps reduce a quantity of cell handovers, avoid a large data transmission loss caused by frequent cell handovers of the terminal device, and improve data transmission performance.

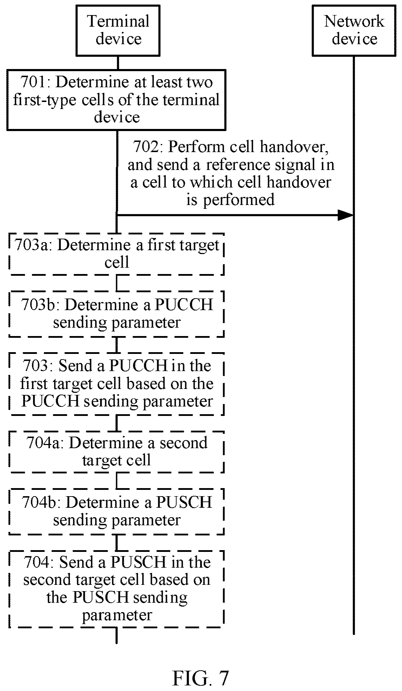

FIG. 7 is a diagram of still another embodiment of a cell handover method according to an embodiment of this application. Refer to FIG. 7. The method includes the following steps.

701: A terminal device determines at least two first-type cells of the terminal device.

The at least two first-type cells each are a cell for which a PUCCH and/or a PUSCH of the terminal device are/is not configured. In other words, the at least two first-type cells are secondary cells of the terminal device. For example, as shown in FIG. 5, none of a CC 2, a CC 3, a CC 4, and a CC 5 is a first-type cell of the terminal device.

702: The terminal device performs cell handover, and sends a reference signal in a cell to which the terminal device performs handover.

Optionally, that the terminal device performs cell handover, and sends the reference signal in the cell to which the terminal device performs handover includes: The at least two first-type cells include two first-type cells, and after the terminal device sends a reference signal in a 1^{st} first-type cell in the two first-type cells, if a time interval between reference signal sending time of the 1^{st} first-type cell in the first-type cell of the two first-type cells and reference signal sending time of a 2^{nd} first-type cell in the two first-type cells is less than or equal to a first threshold, the terminal device performs handover to the 2^{nd} first-type cell, or if the time interval is greater than the first threshold, the terminal device performs handover to at least one second-type cell.

Optionally, that the terminal device performs cell handover, and sends the reference signal in the cell to which the terminal device performs handover includes: The at least two first-type cells include two first-type cells, and after the terminal device sends a reference signal in a 1^{st} first-type cell in the two first-type cells, if a time interval between reference signal sending time of the 1^{st} first-type cell in the first-type cell of the two first-type cells and reference signal sending time of a 2^{nd} first-type cell in the two first-type cells is less than a first threshold, the terminal device performs handover to the 2^{nd} first-type cell, or if the time interval is greater than or equal to the first threshold, the terminal device performs handover to at least one second-type cell.

Optionally, that the terminal device performs cell handover, and sends the reference signal in the cell to which the terminal device performs handover includes: The at least two first-type cells include two first-type cells, and after the terminal device sends a reference signal in a 1^{st} first-type cell in the two first-type cells, if a time interval between reference signal sending time of the 1^{st} first-type cell in the first-type cell of the two first-type cells and reference signal sending time of a 2^{nd} first-type cell in the two first-type cells is less than a first threshold, the terminal device performs handover to the 2^{nd} first-type cell, or if the time interval is greater than the first threshold, the terminal device performs handover to a second-type cell.

In the foregoing several optional implementations, the two first-type cells are any two neighboring first-type cells in the at least two first-type cells that are sorted in a first order. In other words, the two first-type cells are any two neighboring first-type cells in the at least two sorted first-type cells. The at least two sorted first-type cells are obtained by sorting the at least two first-type cells in the first order. The second-type cell is a cell for which the PUCCH and/or the PUSCH of the terminal device are/is configured. In other words, the second-type cell is a primary cell of the terminal device. The first order includes configuration orders of the at least two first-type cells, index orders of the at least two first-type cells, or reference signal sending time orders of the at least two first-type cells.

Optionally, in the two first-type cells, a configuration order of the 1^{st} first-type cell is before or after a configuration order of the 2^{nd} first-type cell; in the two first-type cells, an index of the 1^{st} first-type cell is greater than or less than an index of the 2^{nd} first-type cell; or in the two first-type cells, reference signal sending time of the 1^{st} first-type cell is earlier than or later than reference signal sending time of the 2^{nd} first-type cell. For example, the reference signal sending time of the 1^{st} first-type cell is in a slot n, and the reference signal sending time of the 2^{nd} first-type cell is in a slot n+k. n is an integer greater than or equal to 0, and k is an integer greater than or equal to 1.

For example, the second-type cell of the terminal device includes a CC 1. The at least two first-type cells sorted in the first order include a CC 2, a CC 3, a CC 4, and a CC 5. For the CC 2 and the CC 3, a configuration order of the CC 2 is before a configuration order of the CC 3, an index of the CC 2 is less than an index of the CC 3, or reference signal sending time of the CC 2 is earlier than reference signal sending time of the CC 3. The terminal device performs handover from the CC 1 to the CC 2. After the terminal device sends a reference signal in the CC 2, the terminal device determines whether a time interval between the reference signal sending time of the CC 2 and the reference signal sending time of the CC 3 is less than or equal to the first threshold. If the time interval is less than or equal to the first threshold, the terminal device performs handover from the CC 2 to the CC 3. If the time interval is greater than the first threshold, the terminal device performs handover from the CC 2 to the CC 1.

For the CC 3 and the CC 4, a configuration order of the CC 3 is before a configuration order of the CC 4, an index of the CC 3 is less than an index of the CC 4, or reference signal sending time of the CC 3 is earlier than reference signal sending time of the CC 4. If the terminal device performs handover from the CC 2 to the CC 3, after the terminal device sends a reference signal in the CC 3, the terminal device determines whether a time interval between the reference signal sending time of the CC 3 and the reference signal sending time of the CC 4 is less than or equal to the first threshold. If the time interval is less than or equal to the first threshold, the terminal device performs handover from the CC 3 to the CC 4. If the time interval is greater than the first threshold, the terminal device performs handover from the CC 3 to the CC 1. Alternatively, after the terminal device performs handover from the CC 2 to the CC 1, the terminal device performs handover from the CC 1 to the CC 3.

For the CC 4 and the CC 5, a configuration order of the CC 4 is before a configuration order of the CC 5, an index of the CC 4 is less than an index of the CC 5, or reference signal sending time of the CC 4 is earlier than reference signal sending time of the CC 5. If the terminal device performs handover from the CC 3 to the CC 4, after the terminal device sends a reference signal in the CC 4, the terminal device determines whether a time interval between the reference signal sending time of the CC 4 and the reference signal sending time of the CC 5 is less than or equal to the first threshold. If the time interval is less than or equal to the first threshold, the terminal device performs handover from the CC 4 to the CC 5. If the time interval is greater than the first threshold, the terminal device performs handover from the CC 4 to the CC 1. Alternatively, after the terminal device performs handover from the CC 3 to the CC 1, the terminal device performs handover from the CC 1 to the CC 4.

Optionally, the first threshold is indicated by the network device to the terminal device, determined and reported by the terminal device based on a capability of the terminal device, specified in a communication protocol, or calculated according to a criterion specified in a communication protocol. This is not specifically limited in this application. For example, the capability of the terminal device includes time needed by the terminal device for adjusting an operating frequency of a radio frequency each time. For example, the first threshold is determined in the communication protocol based on a capability value reported by the terminal device. The capability value reported by the terminal device may be time needed by the terminal device for performing radio frequency switching, for example, several slots or several microseconds.

Optionally, the first threshold may be several microseconds, several milliseconds, or several slots. This is not specifically limited in this application.

In a possible implementation, in the two first-type cells, the time interval between the reference signal sending time of the 1^{st} first-type cell and the reference signal sending time of the 2^{nd} first-type cell includes: a time interval of a time-domain symbol on which the reference signal in the 1^{st} first-type cell is located and a time-domain symbol on which a reference signal in the 2^{nd} first-type cell is located.

Optionally, if a reference signal in each first-type cell occupies a plurality of time-domain symbols, the time interval is a time interval between a last time-domain symbol on which the reference signal in the 1^{st} first-type cell is located and a 1^{st} time-domain symbol on which the reference signal of the 2^{nd} first-type cell is located; the time interval is a time interval between a 1^{st} time-domain symbol on which the reference signal in the 1^{st} first-type cell is located and a last time-domain symbol on which the reference signal of the 2^{nd} first-type cell is located; the time interval is a time interval between a 1^{st} time-domain symbol on which the reference signal in the 1^{st} first-type cell is located and a 1^{st} time-domain symbol on which the reference signal of the 2^{nd} first-type cell is located; or the time interval is a time interval between a last time-domain symbol on which the reference signal in the 1^{st} first-type cell is located and a last time-domain symbol on which the reference signal of the 2^{nd} first-type cell is located.

In another possible implementation, in the two first-type cells, the time interval between the reference signal sending time of the 1^{st} first-type cell and the reference signal sending time of the 2^{nd} first-type cell includes: a time interval of a slot in which the reference signal in the 1^{st} first-type cell is located and a slot in which a reference signal in the 2^{nd} first-type cell is located.

Optionally, if a reference signal in each first-type cell occupies a plurality of slots, the time interval is a time interval between a last slot in which the reference signal in the 1^{st} first-type cell is located and a 1^{st} slot in which the reference signal of the 2^{nd} first-type cell is located; the time interval is a time interval between a 1^{st} slot in which the reference signal in the 1^{st} first-type cell is located and a last slot in which the reference signal of the 2^{nd} first-type cell is located; the time interval is a time interval between a 1^{st} slot in which the reference signal in the 1^{st} first-type cell is located and a 1^{st} slot in which the reference signal of the 2^{nd} first-type cell is located; or the time interval is a time interval between a last slot in which the reference signal in the 1^{st} first-type cell is located and a last slot in which the reference signal of the 2^{nd} first-type cell is located.

Optionally, the embodiment shown in FIG. 7 further includes step 703.

703: The terminal device sends the PUCCH in a first target cell based on a PUCCH sending parameter.

Step 703 is similar to step 403 in the embodiment shown in FIG. 4. For details, refer to the related descriptions of step 403 in the embodiment shown in FIG. 4. The details are not described herein again.

Optionally, the embodiment shown in FIG. 7 further includes step 703a. Step 703a may be performed before step 703.

703a: The terminal device determines the first target cell.

Step 703a is similar to step 403a in the embodiment shown in FIG. 4. For details, refer to the related descriptions of step 403a in the embodiment shown in FIG. 4.

Optionally, the embodiment shown in FIG. 7 further includes step 703b. Step 703b may be performed before step 703.

703b: The terminal device determines the PUCCH sending parameter.

Step 703b is similar to step 403b in the embodiment shown in FIG. 4. For details, refer to the related descriptions of step 403b in the embodiment shown in FIG. 4.

Optionally, the embodiment shown in FIG. 7 further includes step 604.

704: The terminal device sends the PUSCH in a second target cell based on a PUSCH sending parameter.

Step 703 is similar to step 404 in the embodiment shown in FIG. 4. For details, refer to the related descriptions of step 404 in the embodiment shown in FIG. 4. The details are not described herein again.

Optionally, the embodiment shown in FIG. 7 further includes step 704a. Step 704a may be performed before step 704.

704a: The terminal device determines the second target cell.

Step 704a is similar to step 404a in the embodiment shown in FIG. 4. For details, refer to the related descriptions of step 404a in the embodiment shown in FIG. 4.

Optionally, the embodiment shown in FIG. 7 further includes step 704b. Step 704b may be performed before step 704.

704b: The terminal device determines the PUCCH sending parameter.

Step 704b is similar to step 404b in the embodiment shown in FIG. 4. For details, refer to the related descriptions of step 404b in the embodiment shown in FIG. 4.

In the embodiment shown in FIG. 7, the at least two first-type cells include two first-type cells, and after the terminal device sends a reference signal in a 1^{st} first-type cell in the two first-type cells, if a time interval between reference signal sending time of the 1^{st} first-type cell in the first-type cell of the two first-type cells and reference signal sending time of a 2^{nd} first-type cell in the two first-type cells is less than or equal to a first threshold, the terminal device performs handover to the 2^{nd} first-type cell, or if the time interval is greater than the first threshold, the terminal device performs handover to at least one second-type cell. In this way, this avoids a case in which when the time interval is less than or equal to the first threshold, the terminal device performs handover to the 2^{nd} first-type cell and sends the reference signal. Therefore, time-frequency resources are efficiently used. When the time interval is greater than the first threshold, the terminal device may perform handover back to at least one second-type cell, and the terminal device may perform uplink data transmission. In this way, this avoids a case in which when the time interval is greater than the first threshold, the terminal device performs handover to the 2^{nd} first-type cell, the terminal device needs to wait for a long period of time before sending the reference signal, and consequently, the terminal device cannot send uplink data or a reference signal in a long period of time. In addition, the terminal device performs cell handover based on the time interval between the reference signal sending time of the 1^{st} first-type cell and the reference signal sending time of the 2^{nd} first-type cell. This helps reduce a quantity of cell handovers to some extent. In this way, uplink data transmission performance is improved.

The following describes communication apparatuses provided in embodiments of this application.

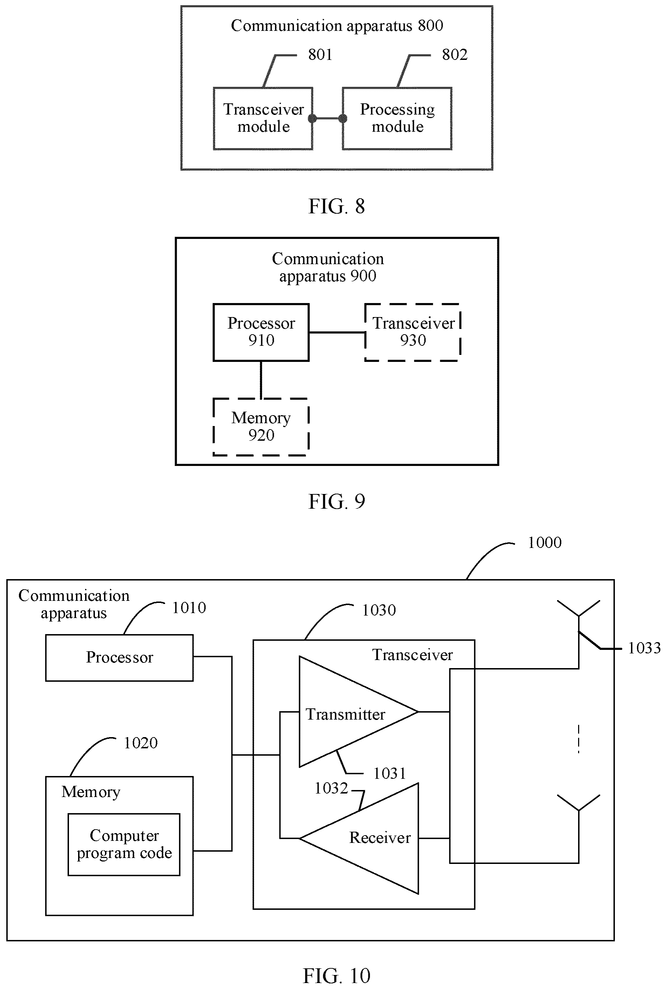

FIG. 8 is a diagram of a structure of a communication apparatus according to an embodiment of this application. Refer to FIG. 8. The communication apparatus may be configured to perform the processes performed by the terminal device in the embodiments shown in FIG. 4, FIG. 6, and FIG. 7. For details, refer to the related descriptions in the foregoing method embodiments.

The communication apparatus 800 includes a transceiver module 801 and a processing module 802.

The processing module 802 is configured to process data. The transceiver module 801 may implement a corresponding communication function. The transceiver module 801 may also be referred to as a communication interface or a communication module.

Optionally, the communication apparatus 800 may further include a storage module. The storage module may be configured to store instructions and/or data. The processing module 802 may read the instructions and/or the data in the storage module, to cause the communication apparatus to implement the foregoing method embodiments.

The communication apparatus 800 may be configured to perform an action performed by the terminal device in the foregoing method embodiments. The communication apparatus 800 may be a terminal device or a component that may be disposed in the terminal device. The processing module 802 is configured to perform a processing-related operation on the terminal device side in the foregoing method embodiments. The transceiver module 801 is configured to perform a receiving-related operation on the terminal device side in the foregoing method embodiments.

Optionally, the transceiver module 801 may include a sending module and a receiving module. The sending module is configured to perform a sending operation in the foregoing method embodiments. The receiving module is configured to perform a receiving operation in the foregoing method embodiments.

It should be noted that the communication apparatus 800 may include the sending module, but does not include the receiving module. Alternatively, the communication apparatus 800 may include the receiving module, but does not include the sending module. This may be specifically determined based on whether the foregoing solution performed by the communication apparatus 800 includes a sending action and a receiving action.

Optionally, the communication apparatus 800 is configured to perform an action performed by the terminal device in any one of the foregoing method embodiments in FIG. 4, FIG. 6, and FIG. 7. For details, refer to the related descriptions in any embodiment in FIG. 4, FIG. 6, and FIG. 7. The details are not described herein again.

It should be understood that specific processes in which the modules perform the foregoing corresponding processes have been described in detail in the foregoing method embodiments. For brevity, details are not described herein again.

The processing module 802 in the foregoing embodiment may be implemented by at least one processor or a processor-related circuit. The transceiver module 801 may be implemented by a transceiver or a transceiver-related circuit. The transceiver module 801 may also be referred to as a communication module or a communication interface. The storage module may be implemented by at least one memory.

An embodiment of this application further provides a communication apparatus 900. Refer to FIG. 9. The communication apparatus 900 includes a processor 910. The processor 910 is coupled to a memory 920. The memory 920 is configured to store a computer program or instructions and/or data. The processor 910 is configured to execute the computer program or the instructions and/or the data stored in the memory 920, so that the methods in the foregoing method embodiments are performed. The communication apparatus 900 is configured to implement an operation performed by the terminal device in the foregoing method embodiments.

Optionally, the communication apparatus 900 includes one or more processors 910.

Optionally, as shown in FIG. 9, the communication apparatus 900 may further include the memory 920.

Optionally, the communication apparatus 900 may include one or more memories 920.

Optionally, the memory 920 and the processor 910 may be integrated together or separately disposed.

Optionally, as shown in FIG. 9, the communication apparatus 900 may further include a transceiver 930. The transceiver 930 is configured to receive and/or send a signal. For example, the processor 910 is configured to control the transceiver 930 to receive and/or send a signal.

This application further provides a communication apparatus 1000. The communication apparatus 1000 may be a terminal device, a processor of the terminal device, or a chip. The communication apparatus 1000 may be configured to perform an operation performed by the terminal device in the foregoing method embodiments.

When the communication apparatus 1000 is a terminal device, FIG. 10 is a simplified diagram of a structure of the terminal device. As shown in FIG. 10, the terminal device includes a processor, a memory, and a transceiver. The memory may store computer program code. The transceiver includes a transmitter 1031, a receiver 1032, a radio frequency circuit (not shown in the figure), an antenna 1033, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to send and receive the radio frequency signal in a form of an electromagnetic wave. The input/output apparatus may include a touchscreen, a display screen, a keyboard, or the like. The input/output apparatus is mainly configured to receive data input by a user and output data to the user. It should be noted that some types of terminal devices may not have an input/output apparatus.

When data needs to be sent, the processor performs baseband processing on the to-be-sent data, and then outputs a baseband signal to a radio frequency circuit. The radio frequency circuit performs radio frequency processing on the baseband signal, and then sends a radio frequency signal in an electromagnetic wave form via the antenna. When data is sent to the terminal device, the radio frequency circuit receives the radio frequency signal by using the antenna, converts the radio frequency signal into a baseband signal, and outputs the baseband signal to the processor. The processor converts the baseband signal into data and processes the data. For ease of description, FIG. 10 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 10, the terminal device includes a processor 1010, a memory 1020, and a transceiver 1030. The processor 1010 may also be referred to as a processing unit, a processing board, a processing module, a processing apparatus, or the like. The transceiver 1030 may also be referred to as a transceiver unit, a transceiver machine, a transceiver apparatus, or the like.

Optionally, a component configured to implement a receiving function in the transceiver 1030 is considered as a receiving module, and a component configured to implement a sending function in the transceiver 1030 is considered as a sending module. That is, the transceiver 1030 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1001 is configured to perform processing actions on the terminal device side in the embodiments shown in FIG. 4, FIG. 6, and FIG. 7. The transceiver 1030 is configured to perform sending and receiving actions on the terminal device side in the embodiments shown in FIG. 4, FIG. 6, and FIG. 7.

It should be understood that FIG. 10 is merely an example rather than a limitation. The terminal device including the transceiver module and the processing module may not depend on the structure shown in FIG. 8 or FIG. 10.

When the communication apparatus 1000 is a chip, the chip includes a processor, a memory, and a transceiver. The transceiver may be an input/output circuit or a communication interface. The processor may be a processing module, a microprocessor, or an integrated circuit integrated on the chip. Sending operations performed by the terminal device in the foregoing method embodiments may be understood as an output of the chip, and receiving operations performed by the terminal device in the foregoing method embodiments may be understood as an input of the chip.

An embodiment of this application further provides a computer-readable storage medium. The computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

An embodiment of this application further provides a communication system. The communication system includes the terminal device in the foregoing embodiments and the network device in the foregoing embodiments.

An embodiment of this application further provides a chip apparatus, including a processor, configured to invoke a computer program or computer instructions stored in a memory, to cause the processor to perform the methods in the embodiments shown in FIG. 4, FIG. 6, and FIG. 7.

In a possible implementation, an input of the chip apparatus corresponds to a receiving operation in any one of the embodiments shown in FIG. 4, FIG. 6, and FIG. 7, and an output of the chip apparatus corresponds to a sending operation in any one of the embodiments shown in FIG. 4, FIG. 6, and FIG. 7.

Optionally, the processor is coupled to the memory through an interface.

Optionally, the chip apparatus further includes the memory, and the memory stores the computer program or the computer instructions.

The processor mentioned above may be a general-purpose central processing unit, a microprocessor, an application-specific integrated circuit (application-specific integrated circuit, ASIC), or one or more integrated circuits configured to control program execution of the method provided in any one of the embodiments shown in FIG. 4, FIG. 6, and FIG. 7. The memory mentioned in any one of the foregoing may be a read-only memory (read-only memory, ROM), another type of static storage device that can store static information and instructions, a random access memory (random access memory, RAM), or the like.

It can be clearly understood by a person skilled in the art that, for convenient and brief description, for explanations and beneficial effects of related content in any one of the communication apparatuses provided above, refer to the corresponding method embodiments provided above. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions in this application or all or a part of the technical solutions may be implemented in a form of a software product. The computer software product is stored in a storage medium, and includes several instructions for causing a computer device (which may be a personal computer, a server, a network device, or the like) to perform all or a part of steps of the methods in embodiments of this application. The foregoing storage medium includes any medium that can store program code, for example, a USB flash drive, a removable hard disk, a ROM, a RAM, a magnetic disk, or an optical disc.

In conclusion, the foregoing embodiments are merely intended for describing the technical solutions in this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions in embodiments of this application.

## Claims

1. A cell handover method, wherein the method comprises:
receiving, by a terminal device, configuration information from a network device, wherein the configuration information is used to configure at least one cell group, each cell group of the at least one cell group comprises at least one first-type cell, and the first-type cell is a cell for which a physical uplink control channel PUCCH and/or a physical uplink shared channel PUSCH of the terminal device are/is not configured; and
performing, by the terminal device, cell handover, and sending a reference signal in a cell to which the terminal device performs handover, wherein
performing, by the terminal device, cell handover, and sending the reference signal in the cell to which the terminal device performs handover comprises at least one of the following:
for the at least one cell group, sequentially performing, by the terminal device, handover in a first order to a first-type cell of the at least one cell group for sending a reference signal, wherein the first order comprises a configuration order of the at least one cell group, an index order of the at least one cell group, or a reference signal sending time order of a first-type cell comprised in each cell group of the at least one cell group;
for any cell group of the at least one cell group, sequentially performing, by the terminal device, handover in a second order to at least one first-type cell in the any cell group for sending a reference signal, wherein the second order comprises a configuration order, an index order, or a reference signal sending time order of the at least one first-type cell in the any cell group; or
for the at least one cell group comprising a first cell group and a second cell group, after sending a reference signal in a first-type cell in the first cell group, performing, by the terminal device, handover to at least one second-type cell, and performing handover to a first-type cell in the second cell group for sending a reference signal, wherein the second-type cell is a cell for which the PUCCH and/or the PUSCH of the terminal device are/is configured, and the first cell group and the second cell group are any two neighboring cell groups of the at least one cell group that is sorted in the first order.

2. The method according to claim 1, wherein the method further comprises:
sending, by the terminal device, the PUCCH in a target cell based on a PUCCH sending parameter.

3. The method according to claim 2, wherein the method further comprises:
receiving, by the terminal device, first indication information from the network device, wherein the first indication information indicates the target cell;
receiving, by the terminal device, second indication information from the network device, wherein the second indication information indicates a sending slot, and a cell in which the terminal device is located in the sending slot is the target cell; or
receiving, by the terminal device, second indication information from the network device, wherein the second indication information indicates a sending slot, and if the sending slot is not an available slot, a cell in which the terminal device is located in a 1^{st} available slot after the sending slot is the target cell.

4. The method according to claim 2, wherein the PUCCH carries hybrid automatic repeat request HARQ feedback information of a physical downlink shared channel PDSCH, a cell in which the terminal device is located in an available slot is the target cell, and the available slot is a 1^{st} available slot present after a preset time offset is added to receiving time or sending time of the PDSCH.

5. The method according to claim 2, wherein the PUCCH carries channel state information CSI; and if a sending slot is an available slot, a cell in which the terminal device is located in the sending slot is the target cell, wherein the sending slot is a sending slot that is configured by the network device for the terminal device and that is for sending the PUCCH; or
if a sending slot is not an available slot, a cell in which the terminal device is located in a 1^{st} available slot after the sending slot is the target cell, wherein the sending slot is a sending slot that is configured by the network device for the terminal device and that is for sending the PUCCH.

6. The method according to any one of claims 2 to 5, wherein the PUCCH sending parameter comprises at least one of the following: a sending slot of the PUCCH, a frequency-domain resource of the PUCCH, a path loss measurement resource of the PUCCH, or a timing advance TA of the PUCCH.

7. The method according to any one of claims 2 to 6, wherein the method further comprises:
receiving, by the terminal device, the second indication information from the network device, wherein the second indication information indicates the sending slot, and if the sending slot is not an available slot, the 1^{st} available slot after the sending slot is the sending slot of the PUCCH;
carrying, by the PUCCH, the HARQ feedback information of the PDSCH, wherein the 1^{st} available slot present after the preset time offset is added to the sending time or the receiving time of the PDSCH is the sending slot of the PUCCH; or
carrying, by the PUCCH, the CSI, wherein if the sending slot that is configured by the network device for the terminal device and that is for sending the PUCCH is an available slot, the sending slot is the sending slot of the PUCCH; or if the sending slot that is configured by the network device for the terminal device and that is for sending the PUCCH is not an available slot, the 1^{st} available slot after the sending slot is the sending slot of the PUCCH.

8. The method according to any one of claims 3 to 5 and 7, wherein the available slot is a slot that meets a first condition, and the first condition comprises one or a combination of the following:
the available slot is an uplink slot;
the available slot is not in a cell handover time period of the terminal device;
no reference signal is sent in the available slot;
a reference signal is sent in the available slot, and a time-frequency resource for sending the reference signal does not conflict with a time-frequency resource for sending the PUCCH; or
a priority of a reference signal in the available slot is lower than a priority of the PUCCH.

9. The method according to any one of claims 2 to 8, wherein the method further comprises:
determining, by the terminal device based on a number of a start resource block RB and a quantity of RBs that are configured or indicated by the network device for the PUCCH, an RB that is in the target cell and that is for sending the PUCCH.

10. The method according to any one of claims 2 to 9, wherein the method further comprises:
determining, by the terminal device based on a number of a path loss measurement resource configured or indicated by the network device for the PUCCH, a path loss measurement resource that is in the target cell and that is for sending the PUCCH.

11. The method according to any one of claims 2 to 10, wherein the target cell corresponds to two timing advance groups TAGs; and
a cell for which the PUCCH is configured corresponds to one TAG, and when the terminal device transmits the PUCCH in the target cell, the TA of the PUCCH is a TA corresponding to a 1^{st} TAG or a TAG with a smaller identifier in the two TAGs; or
a cell for which the PUCCH is configured corresponds to two TAGs and the PUCCH corresponds to one TAG of the two TAGs, and when the terminal device transmits the PUCCH in the target cell, the TA of the PUCCH is a TA corresponding to a TAG that is in the two TAGs corresponding to the target cell and that has a same identifier as one of the TAGs.

12. A communication apparatus, wherein the communication apparatus comprises a transceiver module and a processing module, wherein
the transceiver module is configured to perform a transceiver operation in the method according to any one of claims 1 to 11, and the processing module is configured to perform a processing operation in the method according to any one of claims 1 to 11.

13. A communication apparatus, wherein the communication apparatus comprises:
a memory, configured to store computer instructions; and
a processor, configured to execute a computer program or the computer instructions stored in the memory, to cause the communication apparatus to perform the method according to any one of claims 1 to 11.

14. A communication apparatus, wherein the communication apparatus comprises a processor, and the processor is configured to execute a computer program or computer instructions in a memory, to perform the method according to any one of claims 1 to 11.

15. A computer-readable storage medium, wherein the computer-readable storage medium stores a computer program, and when the computer program is executed by a communication apparatus, the communication apparatus is caused to perform the method according to any one of claims 1 to 11.

16. A communication system, wherein the communication system comprises a terminal device and a network device; the terminal device is configured to perform the method according to any one of claims 1 to 11; and the network device is configured to send first configuration information to the terminal device, wherein the configuration information is used to configure at least one cell group, each cell group of the at least one cell group comprises at least one first-type cell, and the first-type cell is a cell for which a physical uplink control channel PUCCH and/or a physical uplink shared channel PUSCH of the terminal device are/is not configured.
